# EUROPEAN PATENT APPLICATION

(11) **EP 4 374 990 A1**
(43) Date of publication of application: **29.05.2024**
(21) Application number: 23206717.3
(22) Date of filing: 30.10.2023
(51) Int. Cl.: B22F 10/22, B22F 10/50, B22F 12/17, B22F 12/53, B22F 12/55, B28B 1/00, B33Y 30/00

(54) **THREE-DIMENSIONAL PRINTING APPARATUS**

(30) Priority: 31.10.2022 KR 20220142086; 27.12.2022 KR 20220186284; 21.08.2023 KR 20230109127
(71) Applicant: UniTech3DP Inc., Daejeon 34051 (KR)
(72) Inventor: KIM, Sanglae, Daejeon (KR); ANDREU GONZALEZ, Alberto, Daejeon (KR)
(74) Representative: Ruttensperger Lachnit Trossin Gomoll

(57) **Abstract**

Provided is a three-dimensional printing apparatus. The three-dimensional printing apparatus includes a stage configured to provide a support base for a physical object to be modeled, first and second discharge nozzles provided on the stage and configured to discharge a first material in a paste-state or slurry-state that forms the outline of the physical object and a second material in a liquid phase that fills a filling space surrounded by the outline of the physical object formed from the first material, respectively, an extrusion device for extruding the first material toward the first discharge nozzle, the extrusion device connected to the first discharge nozzle and configured to discharge the first material in a paste-state or slurry-state, which is a mixture of ceramic particles and a matrix in which the ceramic particles are dispersed, a heating funnel connected to the second discharge nozzle and configured to receive a metal block and melt the metal block, such that the second material of metal flow in a liquid phase which is the molten metal block is discharged through the second discharge nozzle, and a heating chamber for accommodating the stage and providing a slow cooling space for the first and second materials accumulated on the stage from the first and second discharge nozzles.

According to the disclosure, provided is a three-dimensional printing apparatus capable of forming a physical object with reduced internal defects such as voids and thermal stress while also forming a physical object with a smooth surface and a beautiful exterior.

## Description

### CROSS-REFERENCE TO RELATED APPLICATION

This application is based on and claims priority under 35 U.S.C. §119 to Korean Patent Application Nos. 10-2022-0142086, filed on October 31, 2022, 10-2022-0186284, filed on December 27, 2022, and 10-2023-0109127, filed on August 21, 2023, in the Korean Intellectual Property Office, the disclosures of which are incorporated by reference herein in their entireties.

### BACKGROUND

### 1. Field

The disclosure relates to a three-dimensional printing apparatus.

### 2. Description of the Related Art

A three-dimensional printing apparatus used for forming a physical object with a specific shape is capable of manufacturing a physical object by, for example, depositing each layer of the physical object using the sliced section data of the physical object to be modeled as input. For example, the three-dimensional printing apparatus may manufacture a physical object by generating the three-dimensional shape of the physical object to be modeled as digital data through computer modeling, and differentiating the three-dimensional shape thereof into two-dimensional planes, and continuously depositing the two-dimensional planes.

### SUMMARY

Provided is a three-dimensional printing apparatus, which may shorten the time for manufacturing a physical object.

Provided is a three-dimensional printing apparatus with a structure for manufacturing a physical object.

Provided is a three-dimensional printing apparatus, which may form a physical object with reduced internal defects such as voids and thermal stress while also forming a physical object with a smooth surface and a beautiful exterior.

Additional aspects will be set forth in part in the description which follows and, in part, will be apparent from the description, or may be learned by practice of the presented embodiments of the disclosure.

According to an aspect of the inventive concept, there is provided a three-dimensional printing apparatus, including
a stage configured to provide a support base for a physical object to be modeled,
first and second discharge nozzles provided on the stage and configured to discharge a first material in a paste-state or slurry-state that forms the outline of the physical object and a second material in a liquid phase that fills a filling space surrounded by the outline of the physical object formed from the first material, respectively,
an extrusion device for extruding the first material toward the first discharge nozzle, the extrusion device connected to the first discharge nozzle and configured to discharge the first material in a paste-state or slurry-state, in which ceramic particles and a matrix in which the ceramic particles are dispersed are mixed,
a heating funnel connected to the second discharge nozzle and configured to receive a metal block and melt the metal block, such that the second material of metal flow in a liquid phase which is the molten metal block is discharged through the second discharge nozzle, and
a heating chamber for accommodating the stage and providing a slow cooling space for the first and second materials accumulated on the stage from the first and second discharge nozzles.

For example, an inner diameter of the second discharge nozzle may be smaller than a diameter corresponding to a longest dimension of the metal block introduced into an inlet at the top of the heating funnel connected to the second discharge nozzle at the bottom thereof.

For example, an inner diameter of the metal block formed in the shape of a disk may be about 50 mm, and
the inner diameter of the second discharge nozzle may be about 0.1 mm to about 4 mm, e.g., about 1 mm to about 2 mm.

For example, the heating funnel may be formed in a Y shape so that an inner diameter of the heating funnel gradually decreases from the inner diameter of the inlet at the top of the heating funnel into the metal block is introduced to the inner diameter of the second discharge nozzle at the bottom thereof through which the second material of metal flow is discharged.

For example, a first heat source for melting the metal block introduced into the heating funnel is wound around an outer surface of the heating funnel.

For example, the first heat source may be located between the heating funnel where the second discharge nozzle is formed at the bottom facing the stage and a discharge unit where the first discharge nozzle is formed at the bottom facing the stage.

For example, the three-dimensional printing apparatus may further include an embedding block for embedding the first and second discharge nozzles together.

For example, the embedding block may fix the position of the first and second discharge nozzles by embedding the first and second discharge nozzles so that a gap between the first and second discharge nozzles is maintained between about 3 m and about 50 mm. For example, the embedding block may maintain the gap between the first and second discharge nozzles at about 25 mm.

For example, the embedding block may be formed from the bottoms of the heating funnel and the discharge unit, where the first and second discharge nozzles are formed, to a height exposing the inlet at the top of the heating funnel and a fitting end at the top of the discharge unit, and
a connecting tube may be fitted into the fitting end at the top of the discharge unit to mediate the transfer of the first material between the extrusion device and the fitting end thereof.

For example, the embedding block may surround the first heat source wound on the outer surface of the heating funnel together with the discharge unit spaced apart from the first heat source wound on the outer surface of the heating funnel and extending parallel to the outer surface of the heating funnel.

For example, the discharge unit may extend in a diagonal direction that simultaneously follows a height direction and a radial direction of the heating funnel so as to be parallel to the outer surface of the heating funnel, and the first discharge nozzle extending toward the stage from a bottleneck forming a minimum inner diameter of the heating funnel may extend parallel to the second discharge nozzle extending toward the stage from a bend of the discharge unit.

For example, a second temperature of the heating funnel may be higher than a first temperature of the discharge unit.

For example, the temperature difference between the first and second temperatures may be induced by thermal resistance of insulating material of the embedding block filling a space between the heating funnel and the discharge unit which extend parallel to each other.

For example, the second temperature of the heating funnel is set to a sufficiently high temperature above the melting point of the metal block, and
the first temperature of the discharge unit may be set to a sufficiently low temperature at which vaporization or volatilization of the matrix mixed in the first material is suppressed.

For example, a third temperature of the slow cooling space of the heating chamber may be lower than the second temperature of the heating funnel and higher than the first temperature of the discharge unit.

For example, the third temperature of the slow cooling space of the heating chamber may be set to a sufficiently high temperature capable of inducing vaporization or volatilization of the matrix mixed in the first material within the slow cooling space.

For example, the embedding block may be vertically connected to the heating chamber through a discharge hole for the flow of the first and second materials from the first and second discharge nozzles embedded in the embedding block toward the stage accommodated in the slow cooling space of the heating chamber.

For example, the embedding block may include
an upper block embedding a heating funnel and a discharge unit including first and second discharge units at the bottom, respectively; and
a lower block formed in the shape of a plate with an expanded area from the upper block and covering an upper part of the slow cooling space.

For example, the heating chamber may include a plurality of partition walls that cover side surfaces of the slow cooling space while contacting the lower block through a stepped interface.

For example, adjacent partition walls forming corners of the heating chamber may abut against each other through the stepped interface.

For example, the heating chamber may further include a bottom wall providing an assembly position where the plurality of partition walls are seated and having an opening for the passage of a connecting rod that mediates power connection between the stage inside the slow cooling space and an actuator outside the slow cooling space.

The three-dimensional printing apparatus may further include a bellows cover added to the bottom wall to cover the opening through a link structure that extends parallel to the connecting rod and expands and contracts as the actuator rises and falls.

For example, the three-dimensional printing apparatus may further include
a first heat source wound around the outer surface of the heating funnel and configured to melt the metal block introduced into the heating funnel, and
a second heat source, formed in the heating chamber, for controlling the cooling rate of the first and second materials accumulated on the stage from the first and second discharge nozzles.

For example, during the takt-time to form a physical object,
a first operation time from the start to the end of operation of the first heat source may be shorter than a second operation time from the start to the end of operation of the second heat source.

For example, during the takt-time to form a physical object,
the second heat source may be operated to control the cooling rate of the physical object even after the operation of the first heat source is terminated.

For example, the three-dimensional printing apparatus may not include sintering equipment for solidifying the physical object to complete a physical object in a solid phase.

For example, as the first and second discharge nozzles operate together, discharge positions for the first and second materials may be formed simultaneously on the stage.

For example, a flow rate of the first material discharged from the first discharge nozzle onto the stage may be less than a flow rate of the second material discharged from the second discharge nozzle onto the stage.

For example, a volume of the outline of the physical object formed from the first material may be smaller than a volume of the physical object itself formed from the second material.

For example, the extrusion device may include first and second hoppers into which ceramic particles and a matrix are introduced respectively, a transfer pipe connected to the first and second hoppers, and a rotary screw that rotates inside the transfer pipe and mixes the ceramic particles and matrix introduced from the first and second hoppers to form the first material, and forcibly transfers the first material along a direction of the transfer pipe.

For example, the flow rate of the first material discharged from the first discharge nozzle onto the stage may be controlled by the rotational speed of the rotary screw driven inside the transfer pipe.

For example, the flow rate of the second material discharged from the second discharge nozzle onto the stage may be controlled by the pressure of gas filling a space on a liquid surface of the second material of metal flow inside the heating funnel, e.g., the flow rate of the second material may be controlled by the pressure of inert gas.

Meanwhile, a three-dimensional printing apparatus might comprise:
a stage providing a support base for a physical object to be manufactured using the three-dimensional printing apparatus;
a first discharge nozzle and a second discharge nozzle provided on the stage, the first discharge nozzle discharging a first material in a paste-state or slurry-state that forms an outline of the physical object and the second discharge nozzle discharging a second material in a liquid phase that fills a filling space surrounded by the outline of the physical object formed from the first material;
an extrusion device connected to the first discharge nozzle, the extrusion device extruding the first material in the paste-state or slurry-state from the extrusion device toward the first discharge nozzle, the first material comprising a mixture of ceramic particles and a matrix in which the ceramic particles are dispersed;
a heating funnel connected to the second discharge nozzle, the heating funnel receiving a metal block and melting the metal block to produce molten metal, wherein the second material is the molten metal and has a liquid phase; and
a heating chamber for accommodating the stage and providing a slow cooling space for the physical object formed by the first and second materials accumulated on the stage.

Meanwhile, a method of manufacturing a physical object using a three-dimensional printing apparatus might comprise:
extruding, via an extrusion device of the three-dimensional printing apparatus, a first material in a paste-state or slurry-state from the extrusion device toward a first discharge nozzle of the three-dimensional printing apparatus, the first material comprising a mixture of ceramic particles and a matrix in which the ceramic particles are dispersed;
discharging, via the first nozzle, the first material to form an outline of the physical object;
receiving, via a heating funnel of the three-dimensional printing apparatus, a metal block;
melting the metal block to produce a molten metal and directing flow of the molten metal to a second nozzle of the three-dimensional printing apparatus, wherein the molten metal is a second material;
discharging, via a second nozzle of the three-dimensional printing apparatus, the second material, the second material filling a filling space surrounded by the outline of the physical object formed from the first material; and
forming the physical object on a stage of the three-dimensional printing apparatus by repeatedly discharging of the first material and/or the second material layer-by-layer.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is an overall perspective view of a three-dimensional printing apparatus according to an embodiment;
FIG. 2 is a plan view showing some of the configurations of FIG. 1, for explaining the forming of a physical object to be modeled by the three-dimensional printing apparatus shown in FIG. 1;
FIG. 3 is a cross-sectional view taken along line III-III' of FIG. 2, for explaining the forming of a physical object to be modeled by the three-dimensional printing apparatus shown in FIG. 1;
FIG. 4 is a diagram for explaining the forming of a physical object to be modeled by the three-dimensional printing apparatus shown in FIG. 1, and for explaining the forming of the outline of the physical object and the physical object filling the filling space surrounded by the outline of the physical object, which are formed from the first and second discharge positions on the stage where the first and second materials are discharged, respectively;
FIG. 5 is a diagram showing a schematic configuration of the extrusion device shown in FIG. 1, for explaining the extrusion device shown in FIG. 1;
FIGS. 6 and 7 are diagrams for explaining the forming of the outline of the physical object and the physical object filling the filling space surrounded by the outline of the physical object, which are formed from the first and second discharge positions on the stage where the first and second materials are discharged, respectively, and for explaining an operation mode in which the first and second materials are discharged sequentially, and an operation mode in which the first and second materials are discharged simultaneously;
FIG. 8 is a perspective view of a portion of the three-dimensional printing apparatus shown in FIG. 1;
FIG. 9 is an exploded perspective view for explaining the assembly between a heating funnel, a discharge unit, and a first heat source embedded in the embedding block shown in FIG. 8;
FIG. 10 is an exploded perspective view for explaining the airtight assembly between the embedding block and the heating chamber;
FIG. 11 is an exploded perspective view for explaining a discharge hole formed in the embedding block shown in FIG. 10;
FIG. 12 is a diagram for explaining a configuration in which a flow rate (a volume passing through a cross-sectional area per unit time) or discharge speed of the second material in the heating funnel is controlled by a sealing cover disposed on the heating funnel and an internal pressure of gas filling a space sealed by the sealing cover;
FIG. 13A is a diagram illustrating, during the takt-time to form a physical object, a temperature profile of a first temperature in the heating funnel and a temperature profile of a second temperature of the discharge unit, which are followed as target temperatures;
FIG. 13B is a diagram for illustrating, during the takt-time to form a physical object, a temperature profile of a third temperature in the heating chamber which is followed as a target temperature, and for illustrating a gentle profile of the third temperature for slow cooling of the physical object;
FIGS. 14A and 14B are diagrams for schematically explaining the change in the amount of transfer of the stage required to move to the same target position due to the change in a gap between the first and second discharge nozzles; and
FIGS. 15 and 16 are different diagrams for explaining a bellows cover to seal an opening of the heating chamber, regardless of the power connection between the stage and an actuator and the operation of the actuator, and a link structure connected to the bellows cover.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, with reference to the attached drawings, a three-dimensional printing apparatus according to preferred embodiments described. In accordance with some embodiments disclosed herein, the three-dimensional printing apparatus can be used to manufacture (e.g., fabricate) a physical object (e.g., via three-dimensional printing). In some embodiments, the three-dimensional printing apparatus manufactures a physical object using a single material. In some embodiments, the three-dimensional printing apparatus manufactures a physical object using two or more materials. The two of more materials can have the same phase (e.g., state) (e.g., solid, liquid, solid-liquid mixture) or different phases. In some embodiments, the three-dimensional printing apparatus uses multi-phase materials to manufacture a physical object. As used herein, "multi-phase materials" refer to at least two materials (e.g., a first material and a second material) having two different phases (e.g., states). In some embodiments, the two different phases can include a solid phase (e.g., a solid state), a liquid phase (e.g., a liquid state), a gaseous phase (e.g., a gaseous state), a molten phase (e.g., a molten state), a mixed phase (e.g., a mixed state, such as a combination of solid and liquid phases, or a combination of solid and gaseous phases, or a combination of liquid and gaseous phases). In some embodiments, the at least two materials are used in different ratios. In some embodiments, the at least two materials can be used separately. In some embodiments, the physical object is formed by layer-by-layer accumulation of the material(s) on a stage of the three-dimensional printing apparatus.

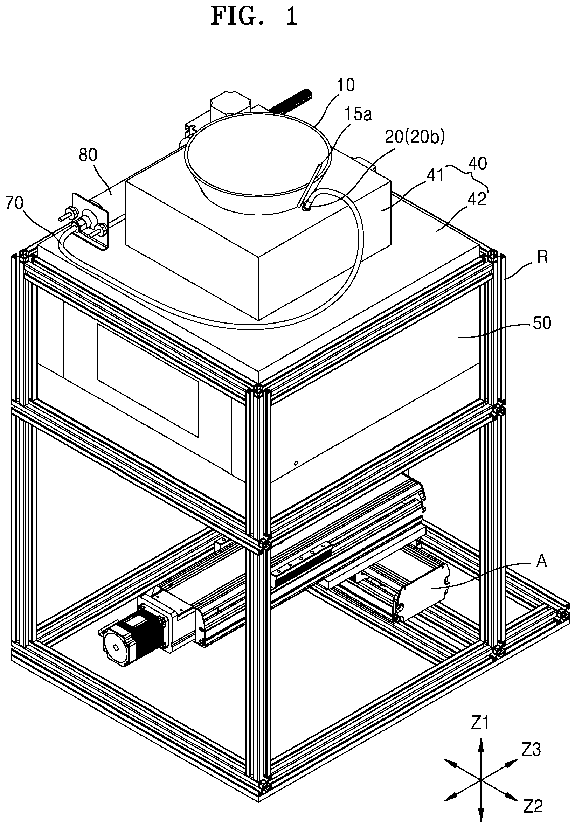

FIG. 1 is an overall perspective view of a three-dimensional printing apparatus using multi-phase materials according to an embodiment.

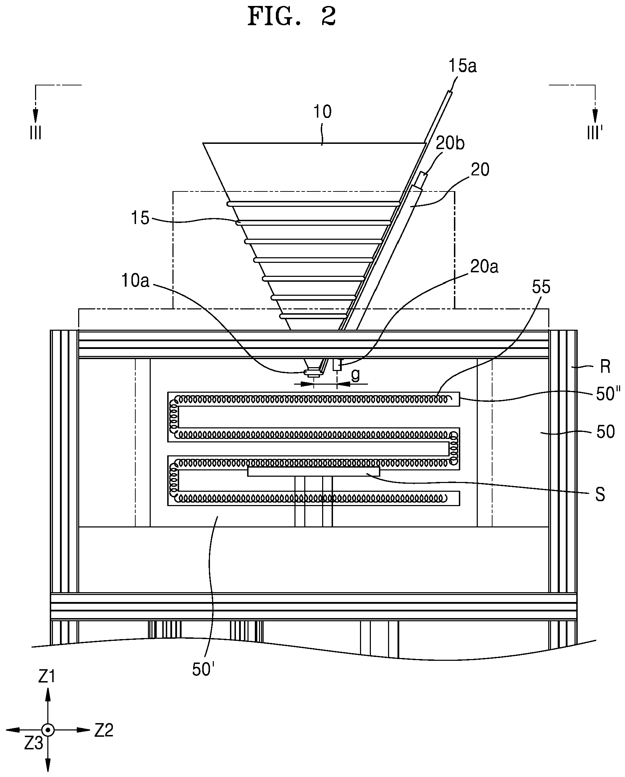

FIG. 2 is a plan view showing some of the configurations of FIG. 1, for explaining the forming of a physical object to be modeled by the three-dimensional printing apparatus shown in FIG. 1.

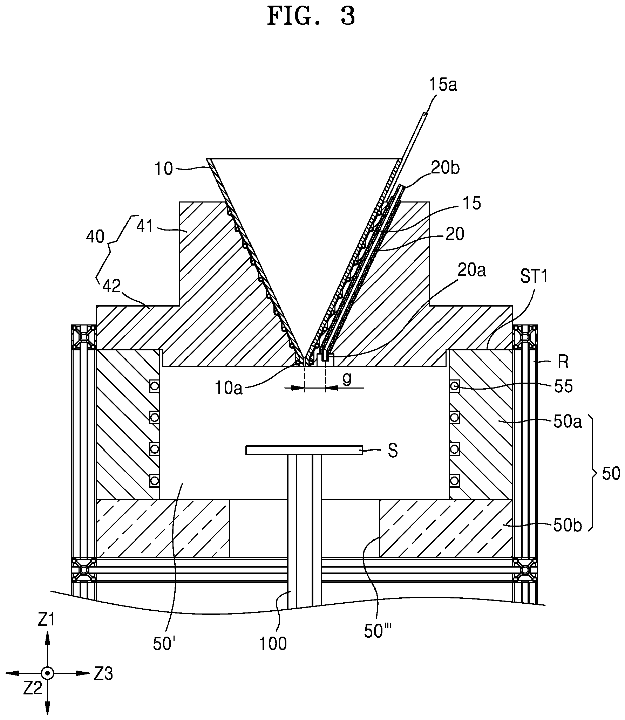

FIG. 3 is a cross-sectional view taken along line III-III' of FIG. 2, for explaining the forming of a physical object to be modeled by the three-dimensional printing apparatus shown in FIG. 1.

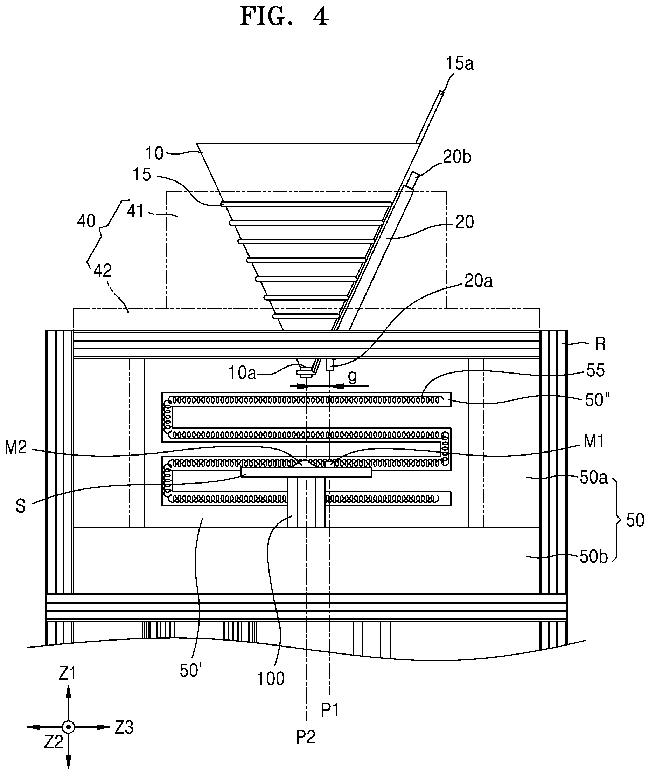

FIG. 4 is a diagram for explaining the forming of a physical object to be modeled by the three-dimensional printing apparatus shown in FIG. 1, and for explaining the forming of the outline of the physical object and the physical object filling the filling space FS surrounded by the outline of the physical object, which are formed from the first and second discharge positions P1 and P2 on the stage S where the first and second materials M1 and M2 are discharged, respectively.

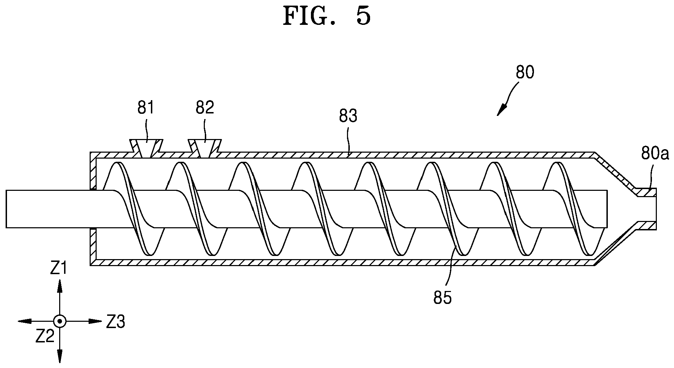

FIG. 5 is a diagram showing a schematic configuration of the extrusion device 80 shown in FIG. 1, for explaining the extrusion device 80 shown in FIG. 1.

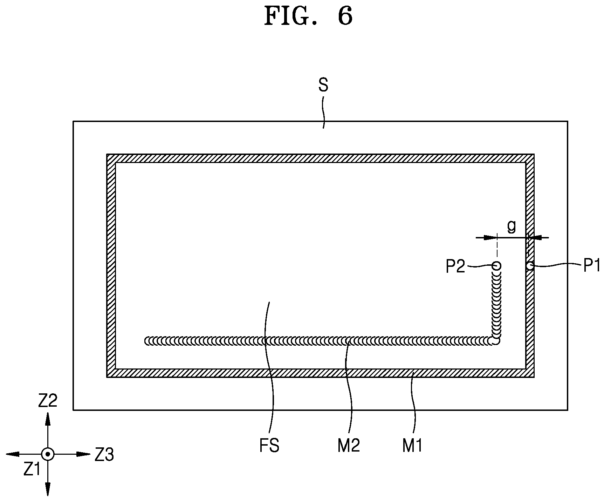

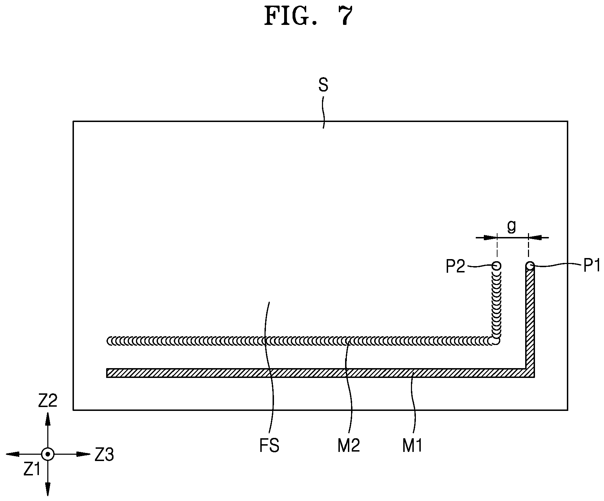

FIGS. 6 and 7 are diagrams for explaining the forming of the outline of the physical object and the physical object filling the filling space FS surrounded by the outline of the physical object, which are formed from the first and second discharge positions P1 and P2 on the stage S where the first and second materials M1 and M2 are discharged, respectively, and for explaining an operation mode in which the first and second materials M1 and M2 are discharged sequentially, and an operation mode in which the first and second materials M1 and M2 are discharged simultaneously.

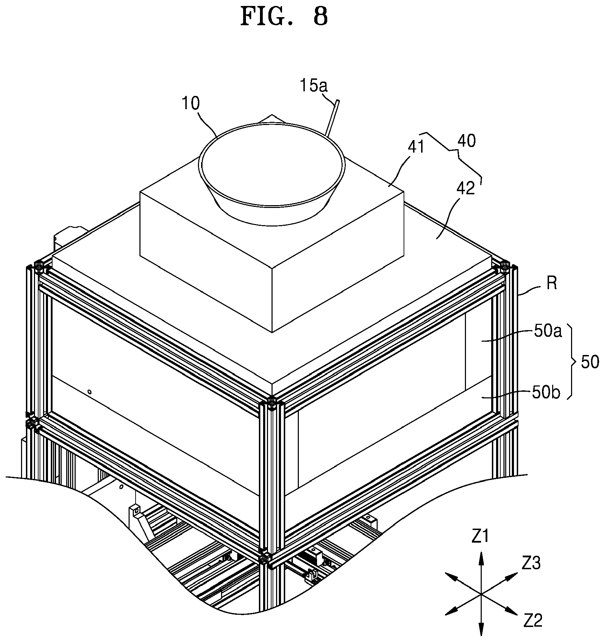

FIG. 8 is a perspective view of a portion of the three-dimensional printing apparatus shown in FIG. 1.

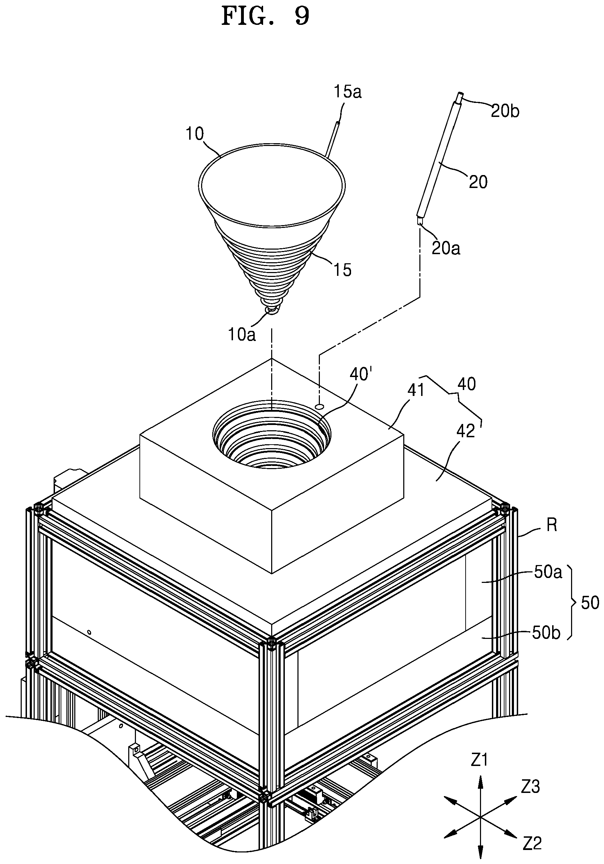

FIG. 9 is an exploded perspective view for explaining the assembly between a heating funnel 10, a discharge unit 20, and a first heat source 15 embedded in the embedding block 40 shown in FIG. 8.

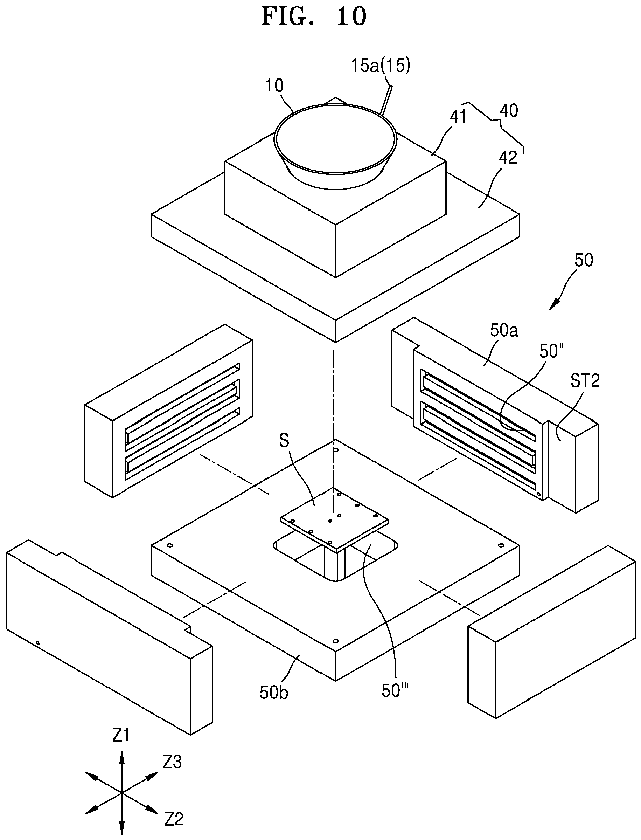

FIG. 10 is an exploded perspective view for explaining the airtight assembly between the embedding block 40 and the heating chamber 50.

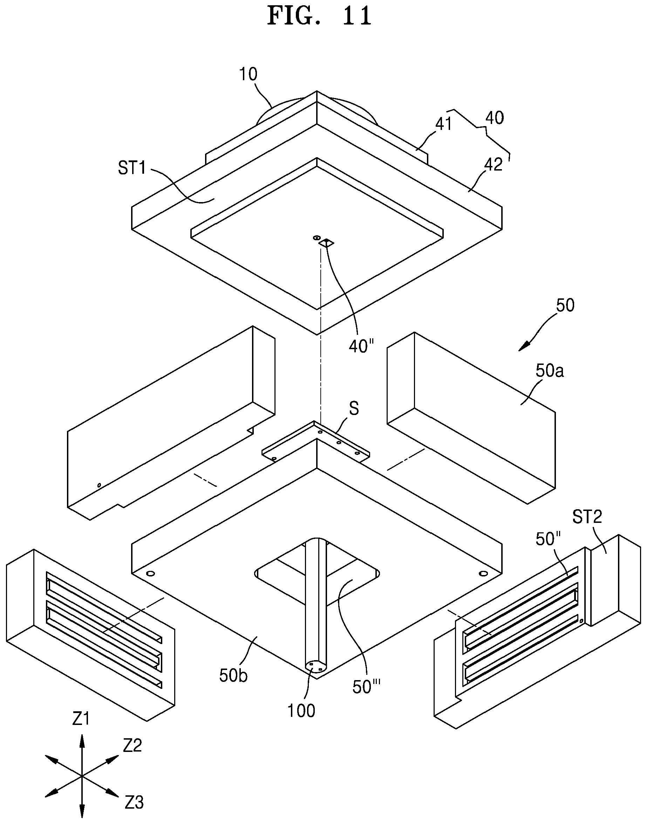

FIG. 11 is an exploded perspective view for explaining a discharge hole 40" formed in the embedding block 40 shown in FIG. 10.

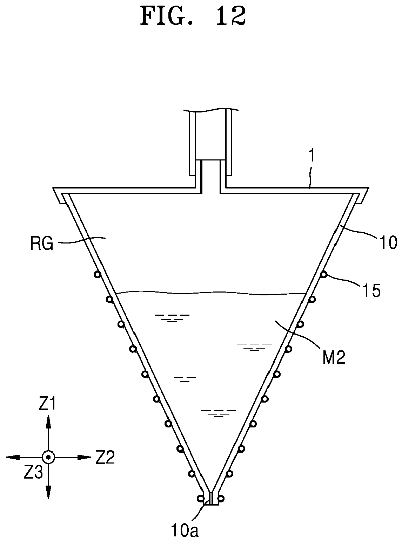

FIG. 12 is a diagram for explaining a configuration in which a flow rate (a volume passing through a cross-sectional area per unit time) or discharge speed of the second material M2 in the heating funnel 10 is controlled by a sealing cover 1 disposed on the heating funnel 10 and an internal pressure of gas RG filling a space sealed by the sealing cover 1.

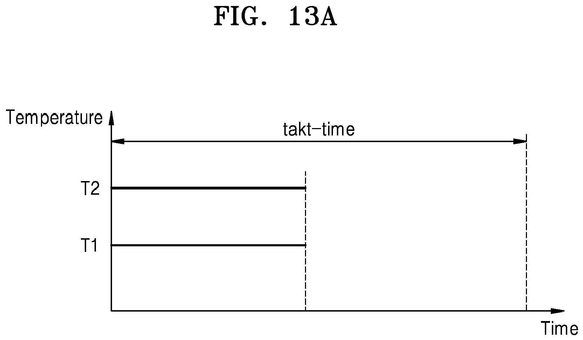

FIG. 13A is a diagram illustrating, during the takt-time to form a physical object, a temperature profile of a first temperature T1 in the heating funnel 10 and a temperature profile of a second temperature T2 of the discharge unit 20, which are followed as target temperatures.

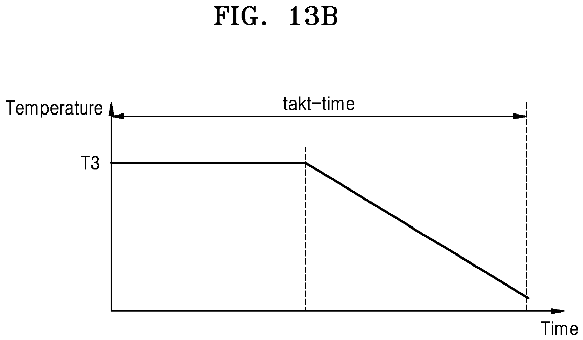

FIG. 13B is a diagram for illustrating, during the takt-time to form a physical object, a temperature profile of a third temperature T3 in the heating chamber 50 which is followed as a target temperature, and for illustrating a gentle profile of the third temperature T3 for slow cooling of the physical object.

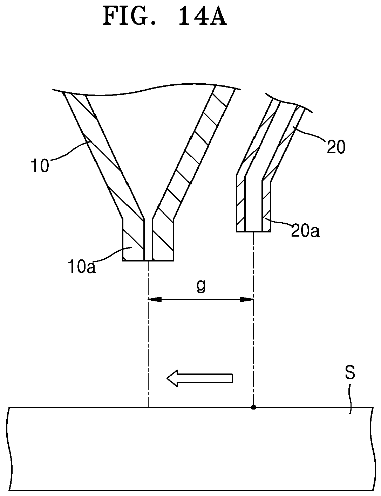

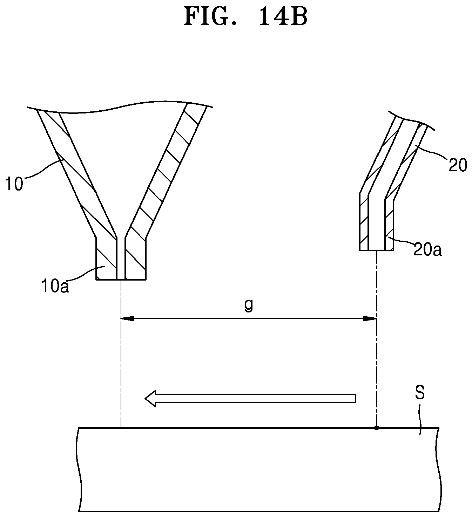

FIGS. 14A and 14B are diagrams for schematically explaining the change in the amount of transfer of the stage S required to move to the same target position due to the change in a gap g between the first and second discharge nozzles 20a and 10a.

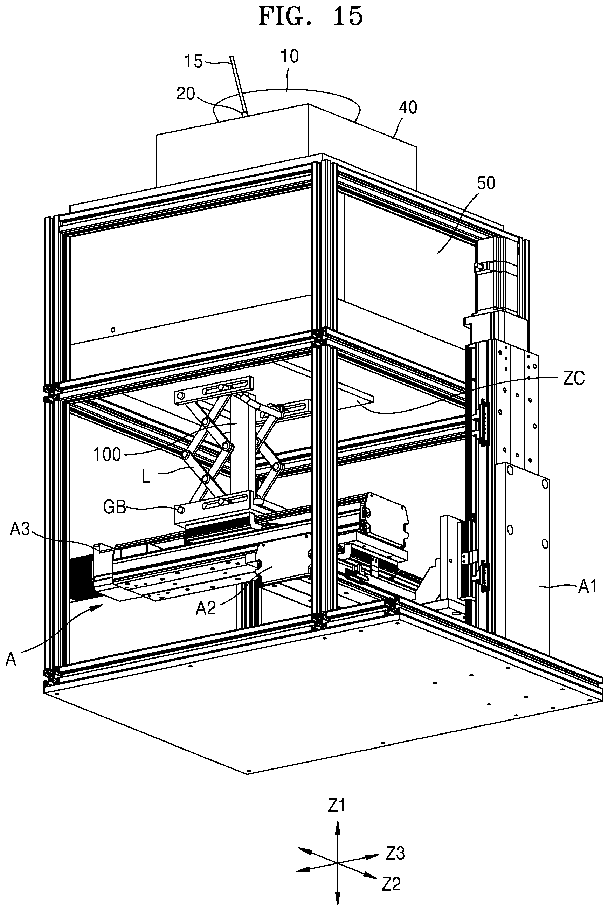

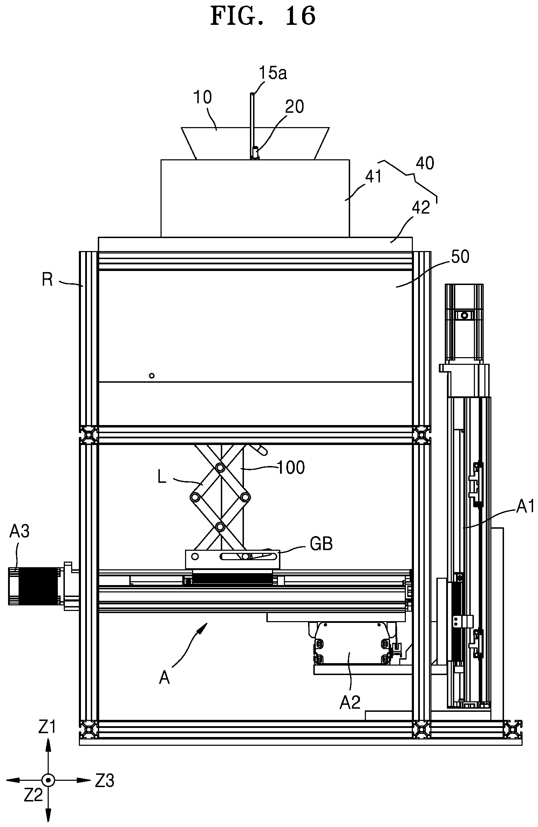

FIGS. 15 and 16 are different diagrams for explaining a bellows cover ZC to seal an opening 50‴ of the heating chamber 50, regardless of the power connection between the stage S and an actuator A and the operation of the actuator A, and a link structure L connected to the bellows cover ZC.

Referring to the drawings, the three-dimensional printing apparatus according to an embodiment may include a stage S configured to provide a support base for a physical object to be modeled, first and second discharge nozzles 20a and 10a provided on the stage S and configured to discharge a first material M1 in a paste-state or slurry-state that forms the outline of the physical object and a second material M2 in a liquid phase that fills a filling space FS surrounded by the outline of the physical object formed from the first material M1, respectively, an extrusion device 80 for extruding the first material M1 toward the first discharge nozzle 20a, the extrusion device 80 connected to the first discharge nozzle 20a and configured to discharge the first material M1 in a paste-state or slurry-state, in which ceramic particles and a matrix in which the ceramic particles are dispersed are mixed, a heating funnel 10 for melting a metal block, the heating funnel 10 connected to the second discharge nozzle 10a and configured to receive a metal block and melt the metal block, such that the second material M2 of metal flow in a liquid phase which is the molten metal block is discharged through the second discharge nozzle 10a, and a heating chamber 50 for accommodating the stage S and providing a slow cooling space 50' for the first and second materials M1 and M2 accumulated on the stage S from the first and second discharge nozzles 20a and 10a.

The three-dimensional printing apparatus according to an embodiment may form a three-dimensional physical object from the accumulation of the first and second materials M1 and M2 supplied from the first and second discharge nozzles 20a and 10a, according to sliced section data of the three dimensional physical object to be modeled.

In an embodiment, the first material M1 for forming the outline of the physical object to be modeled may be formed in a paste-state or slurry-state in which ceramic particles and a matrix in which the ceramic particles are dispersed are mixed. More specifically, the first material M1 may be formed in a paste-state or slurry-state in which ceramic particles and a matrix for providing fluidity to the ceramic particles are mixed. In an embodiment, the matrix, as a base material that is mixed with a plurality of ceramic particles and accommodates the plurality of ceramic particles in a dispersed form to form the first material M1 in a paste-state or slurry-state in which the plurality of ceramic particles are dispersed, may have a material phase with fluidity, such as a liquid phase or gel phase, and may include water (H₂O) for providing fluidity to the plurality of ceramic particles. In an embodiment, the matrix may include H₂O as a vehicle for providing fluidity to the ceramic particles, and may not include, for example, a binder for controlling the viscosity of the first material M1. In an embodiment, the first material M1 may include a plurality of ceramic particles and H₂O as a matrix in which the plurality of ceramic particles are dispersed. The second material M2 for forming the physical object itself within the outline of the physical object may include metal in a liquid phase, and more specifically, metal flow in a liquid phase.

In an embodiment, the first and second materials M1 and M2 may be prepared from different first and second raw materials through different pretreatment processes, respectively. For example, the first and second materials M1 and M2 may be supplied onto the stage S through different pretreatment processes because the first material M1 in a paste-state or slurry-state and the second material M2 in a liquid phase have different material phases and different fluidities.

The first material M1 may include a paste-state or slurry-state composite material in which solid-phase ceramic particles and a liquid-phase (or gel-phase) vehicle and/or binder are mixed. For example, the ceramic particles may have a particle size on the µm scale. This first material M1 formed in a paste-state or slurry-state with dispersed ceramic particles may have lower fluidity than the second material M2 including metal or metal flow in a liquid phase, and may be forcibly transferred through the first discharge nozzle 20a or the connecting tube 70 connected to the first discharge nozzle 20a using extrusion to form a homogeneous mixture (or dispersion at a homogeneous concentration) between the ceramic particles and the matrix accommodating the ceramic particles, where the ceramic particles (in a solid phase) and the matrix (in a liquid or gel phase) have different material phases.

For example, the extrusion device 80 for extruding the first material M1 may include a first hopper 81 into which ceramic particles forming a solid-phase component of the first material M1 are introduced and a second hopper 82 into which a matrix that accommodates the ceramic particles and forms a paste-state or slurry-state is introduced, where the ceramic particles and the matrix introduced from the first and second hoppers 81 and 82 may be introduced together into a transfer pipe 83 of the extrusion device 80, and transferred along the supply direction toward the stage S while being mixed with each other by a rotary screw 85 formed inside the transfer pipe 83. For example, the ceramic particles and the matrix may pass through the connecting tube 70 that mediates the transfer of the first material M1 between a discharge port 80a of the extrusion device 80 and the first discharge nozzle 20a formed above the stage S or the discharge unit 20 including the first discharge nozzle 20a at the bottom, and may be discharged onto the stage S through the first discharge nozzle 20a at the bottom of the discharge unit 20 along the discharge unit 20 embedded in an embedding block 40 to be described below. For example, in an embodiment, an upstream end of the connecting tube 70 may be connected to the discharge port 80a of the extrusion device 80, and a downstream end of the connecting tube 70 may be connected to the discharge unit 20 including the first discharge nozzle 20a at the bottom. Although not shown in the drawing, throughout this disclosure, the terminology of extrusion device might be broadly interpreted and is not intended to limited to the above described rotary screw based configuration and the extrusion device might be implemented as piston based configuration where pre-processed ceramic pastes in the piston container might be pressed toward the discharge unit 20 by piston driving.

The second material M2 may include metal or metal flow in a liquid phase formed from the heating funnel 10 that receives a metal block in a solid phase and heats the metal block above its melting point, and molten metal or metal flow in an internal space of the heating funnel 10 may be discharged onto the stage S through the second discharge nozzle 10a forming the bottom of the heating funnel 10.

In other words, in an embodiment, the liquid-phase metal flow forming the second material M2 may be formed by introducing a metal block as a raw material (second raw material) of the second material M2 into the heating funnel 10 including the second discharge nozzle 10a at the bottom through which the second material M2 is discharged and heating the heating funnel 10 to the melting point or higher of the metal block. For example, in an embodiment, the metal block as the raw material (second raw material) of the second material M2 may be formed in the shape of a disk with a low height and slimmed down size, a longest dimension of the metal block may correspond to a diameter of the disk, and a diameter of the metal block may be about 50 mm. In an embodiment, the heating funnel 10 which receives the metal block and discharges the metal flow may be formed approximately in a Y shape, and an inner diameter of the second discharge nozzle 10a at the bottom of the heating funnel 10, through which the metal flow is discharged, may be smaller in size than an inner diameter of the inlet at the top thereof through which the metal block is introduced. For example, the inner diameter of the inlet at the top into which the metal block is introduced may be longer than the longest dimension of the metal block, but the inner diameter of the second discharge nozzle 10a at the bottom, through which the metal flow formed by melting the metal block within the heating funnel 10 is discharged, may be smaller in size than the longest dimension of the metal block. More specifically, the longest dimension of the metal block may correspond to the diameter of the disk of the metal block in the shape of a disk. In an embodiment, when the diameter of the disk is about 50 mm, the inner diameter of the second discharge nozzle 10a may be about 0.1 mm to about 4 mm, which is less than about 50 mm, which is the diameter of the disk in a solid phase, e.g., about 1 mm to about 2 mm.

Throughout the specification, a vertical direction Z1 or a height direction Z1 may correspond to a direction in which the first and second materials M1 and M2 are discharged from the first and second discharge nozzles 20a and 10a onto the stage S, and may refer to a direction in which the first and second discharge nozzles 20a and 10a through which the first and second materials M1 and M2 are respectively discharged are spaced apart from the stage S. For example, the bottom and the top of the heating funnel 10 may refer to a near end relatively close to the stage S and a far end relatively distant from the stage S among both ends of the heating funnel 10 in the height direction Z1, and similarly, the bottom and top of the discharge unit 20 may refer to a near end relatively close to the stage S and a far end relatively distant from the stage S among both ends of the discharge unit 20.

In an embodiment, the heating funnel 10 may be configured to discharge the first material M2 onto the stage S through the second discharge nozzle 10a formed at the bottom, and the discharge unit 20 may be configured to discharge the first material M1 onto the stage S through the first discharge nozzle 20a formed at the bottom. As described below, the heating funnel 10 and the discharge unit 20 may be embedded together in the embedding block 40, and the embedding block 40 may define a gap between the first discharge nozzle 20a forming the bottom of the heating funnel 10 and the second discharge nozzle 10a forming the bottom of the discharge unit 20 by embedding the heating funnel 10 and the discharge unit 20 together and fixing the position thereof. In an embodiment, the embedding block 40 may insulate the internal space of the heating funnel 10 from the surrounding environment to maintain the temperature of the internal space of the heating funnel 10 controlled by the first heat source 15 at a second temperature T2 above the melting point of the metal block while surrounding the first heat source 15 wound on the outer surface of the heating funnel 10, and may maintain the temperature of the discharge unit 20 on the opposite side of the heating funnel 10 with the first heat source 15 positioned therebetween at a first temperature T1 that is higher than the temperature of the surrounding environment or room temperature but lower than the melting point of the metal block. In an embodiment, the embedding block 40 may include an insulating material, and may be positioned between the heating funnel 10 and the discharge unit 20 for discharging the first and second materials M1 and M2, respectively, to generate thermal resistance therebetween, thereby inducing a temperature difference. For example, the second temperature T2 of the internal space of the heating funnel 10 may be maintained above the melting point of the metal block, while the first temperature T1 of the discharge unit 20 may be maintained below the melting point of the metal block, but above the temperature of the surrounding environment or room temperature.

In an embodiment, the heating funnel 10 may be formed in the shape of an approximately Y-shaped funnel of which an inner diameter gradually decreases from the inner diameter of the inlet at the top of the heating funnel 10 to the inner diameter of the second discharge nozzle 10a at the bottom thereof, and the discharge unit 20 may extend in an inclined diagonal direction so as to extend parallel to the heating funnel 10. The heating funnel 10 and the discharge unit 20 extending in parallel with each other may maintain a constant gap in the height direction Z1 from the top to the bottom where the second discharge nozzle 10a and the first discharge nozzle 20a are located. For example, in an embodiment, the heating funnel 10 may extend in a funnel shape of which an inner diameter gradually decreases in radial directions Z2 and Z3 along the height direction Z1 to form the second discharge nozzle 10a at the bottom extending linearly in the height direction Z1 toward the stage S, and the discharge unit 20 extending parallel to the heating funnel 10 may extend diagonally to simultaneously follow the height direction Z1 and the radial directions Z2 and Z3 to form the first discharge nozzle 20a extending linearly in the height direction Z1 toward the stage S. In an embodiment, the heating funnel 10 and the discharge unit 20 may form a deformation point at the position of each of the second discharge nozzle 10a and the first discharge nozzle 20a, and may also form a bottleneck of the minimum inner diameter of the heating funnel 10 or may form a bend of the discharge unit 20. In an embodiment, the bottleneck of the heating funnel 10 and the bend of the discharge unit 20 may be formed at the same level in the height direction.

In an embodiment, the heating funnel 10 and the discharge unit 20 may extend parallel to each other to maintain the same gap at the same level in the height direction Z1, and may extend from the top to the bottom where the second discharge nozzle 10a and the first discharge nozzle 20a are located while maintaining a gap same as the gap between the second discharge nozzle 10a and the first discharge nozzle 20a, each forming the bottom.

In an embodiment, the temperatures of the heating funnel 10 and the discharge unit 20 may be maintained at different first and second temperatures T1 and T2, respectively, through the embedding block 40 filling gaps between the heating funnel 10 and the discharge unit 20 and the first heat source 15 positioned between the heating funnel 10 and the discharge unit 20. For example, the temperatures of the heating funnel 10 and the discharge unit 20 may be maintained at different second temperature T2 and first temperature T1, respectively, by forming thermal resistance through the insulating material of the embedding block 40 that fills the gap between the heating funnel 10 and the discharge unit 20.

The first temperature T1 may correspond to a temperature lower than the melting point of the metal block and higher than the temperature of the surrounding environment or room temperature, and the second temperature T2 may correspond to a temperature higher than the melting point of the metal block. In an embodiment, the first temperature T1 of the discharge unit 20 may correspond to a temperature which is low enough to suppress vaporization or volatilization of the matrix in which ceramic particles are dispersed in the first material M1 discharged from the first discharge nozzle 20a forming the bottom of the discharge unit 20 and maintain a paste-state or slurry-state of the first material M1, and may correspond to a temperature which is high enough to suppress the rapid cooling of the second material M2 in a solid phase that forms the physical object itself and is in contact with the first material M1 that forms the outline of the physical object on the stage S and the heat treatment effect of quenching resulting from the rapid cooling, i.e., high enough to keep slow cooling of the second material M2 from contact between the first and second materials M1 and M2 so that the heat treatment effect of annealing on the second material M2 in contact with the first material M1 that forms the outline of the physical object is induced. The second temperature T2 of the heating funnel 10 or the second temperature T2 of the internal space of the heating funnel 10 may correspond to a temperature higher than the melting point of the metal block, and the second temperature T2 of the internal space of the heating funnel 10 may correspond to a temperature higher than the melting point of the metal block to melt the metal block introduced into the internal space of the heating funnel 10 and discharge the second material M2 in a solid phase through the second discharge nozzle 10a forming the bottom of the heating funnel 10. For example, in an embodiment, the first heat source 15 may maintain the temperature of the internal space of the heating funnel 10 at the second temperature T2 which is above the melting point of the metal block while being wound on the outer surface of the heating funnel 10, the internal space of the heating funnel 10 may be insulated from the surrounding environment through the embedding block 40 surrounding the first heat source 15 wound on the outer surface of the heating funnel 10, and the thermal resistance capable of inducing a temperature difference between the second temperature T2 of the internal space of the heating funnel 10 and the first temperature T1 of the discharge unit 20 may be formed through the insulation material of the embedding block 40 that fills the gap between the outer surface of the heating funnel 10 on which the first heat source 15 is wound and the discharge unit 20. For example, in an embodiment, the first temperature T1 may correspond to a temperature lower than the melting point of the metal block and higher than the temperature of the surrounding environment or room temperature, the second temperature T2 may correspond to a temperature above the melting point of the metal block, and thus, the first temperature T1 of the discharge unit 20 may be lower than the second temperature T2 of the heating funnel 10 or the second temperature T2 of the internal space of the heating funnel 10. The first heat source 15 involved in the first temperature T1 of the discharge unit 20 and the second temperature T2 of the heating funnel 10 may be positioned between the discharge unit 20 and the heating funnel 10 which extend in parallel to each other, and may be positioned close to the heating funnel 10 to create the second temperature T2 which is relatively high. For example, the first heat source 15 may be wound on the outer surface of the heating funnel 10, and the insulating material of the embedding block 40 may be positioned between the first heat source 15 wound on the outer surface of the heating funnel 10 and the discharge unit 20.

Throughout the specification, that the embedding block 40 embeds the heating funnel 10 and the discharge unit 20 together may broadly refer to that the embedding block 40 exposes the inlet forming the top of the heating funnel 10 to visually check the location of the inlet where the metal block is introduced while embedding the first and second discharge nozzles 20a and 10a which form the bottoms of the heating funnel 10 and the discharge unit 20, and exposes the top of the discharge unit 20 into which the connecting tube 70 connected to the extrusion device 80 is fitted, rather than that the embedding block 40 completely embeds the heating funnel 10 and the discharge unit 20. For example, with respect to the position of the heating funnel 10 embedded by the embedding block 40, the embedding block 40 may embed most of the heating funnel 10 around which the first heat source 15 is wound, and may expose the top of the heating funnel 10 from the inlet forming the top of the heating funnel 10 to the level at which the first heat source 15 begins to be wound. In an embodiment, the embedding block 40 may provide insulation from the surrounding environment to block heat loss from the first heat source 15 wound on the outer surface of the heating funnel 10. In an embodiment, the embedding block 40 may embed the heating funnel 10 at least from the start of winding of the first heat source 15 to the end of winding thereof, and for example, may expose a portion from the inlet formed at the top of the heating funnel 10 to the start of winding of the first heat source 15.

In an embodiment, the embedding block 40 may expose the inlet forming the top of the heating funnel 10 and a fitting end 20b forming the top of the discharge unit 20 while embedding most of the heating funnel 10 and the discharge unit 20, and may expose the top of the heating funnel 10 and the top of the discharge unit 20, to have a certain amount of space including the top of the heating funnel 10 for introducing the metal block and the top of the discharge unit 20 for connection with the connecting tube 70. In an embodiment, at the top of the embedding block 40, in addition to the inlet forming the top of the heating funnel 10 and the fitting end 20b forming the top of the discharge unit 20, an electrical contact point 15a of the first heat source 15 surrounding the outer surface of the heating funnel 10 may be exposed, where the electrical contact point 15a of the first heat source 15 may protrude to the highest level to block electrical interference with other surrounding components, e.g., to a level higher than the inlet of the heating funnel 10 and the fitting end 20b of the discharge unit 20 in the height direction Z1.

In an embodiment, the embedding block 40 may embed the heating funnel 10 and the discharge unit 20 together with the first heat source 15, and the embedding block 40 which embeds the heating funnel 10 and the discharge unit 20 together may be connected to the heating chamber 50 for providing a slow cooling space 50' for the physical object formed with the stage S as a support base while accommodating the stage S on which the first and second materials M1 and M2 are accumulated from the first and second discharge nozzles 20a and 10a that form the bottom of the heating funnel 10 and the bottom of the discharge unit 20, respectively. For example, in an embodiment, the embedding block 40 and the heating chamber 50 may be vertically connected through a discharge hole 40" for the flow of the first and second materials M1 and M2 from the first and second discharge nozzles 20a and 10a toward the slow cooling space accommodating the stage S.

In an embodiment, the first and second materials M1 and M2 discharged from the heating funnel 10 and the discharge unit 20, each embedded in the embedding block 40 may be accumulated on the stage S in the slow cooling space 50' of the heating chamber 50. As such, the embedding block 40 may be fluidly connected to the heating chamber 50 for the flow of the first and second materials M1 and M2. Throughout the specification, that the embedding block 40 is fluidly connected to the heating chamber 50 may refer to that the first and second materials M1 and M2 from the heating funnel 10 and the discharge unit 20, each embedded in the embedding block 40 can be accumulated on the stage S in the heating chamber 50. In this sense, that the embedding block 40 is fluidly connected to the heating chamber 50 may refer to that the internal space of the heating funnel 10 (the internal space of the heating funnel 10 accommodating the second material M2) and the internal space of the discharge unit 20 (the internal space of the discharge unit 20 accommodating the first material M1), each embedded in the embedding block 40 are connected to the slow cooling space 50' (the slow cooling space 50' accommodating the stage S) of the heating chamber 50, to form one space where the internal space of the heating funnel 10, the internal space of the discharge unit 20, and the slow cooling space 50' of the heating chamber 50 are all connected.

In an embodiment, the slow cooling space 50' of the heating chamber 50, which provides a support base for the physical object, may be sealed through assembly of the embedding block 40 and the heating chamber 50. That the slow cooling space 50' of the heating chamber 50 is sealed through the assembly of the embedding block 40 and the heating chamber 50 may refer to that the embedding block 40 is fluidly connected to the heating chamber 50 to form one space, and when the one space is formed, e.g., one space where the internal space of the heating funnel 10 accommodating the second material M2, the internal space of the discharge unit 20 accommodating the first material M1, and the slow cooling space 50' of the heating chamber 50 where the stage is provided are fluidly connected, the embedding block 40 and the heating chamber 50 are assembled together in the vertical direction Z1, thereby sealing the one space. In an embodiment, a sealing cover 1 that seals the inlet of the heating funnel 10 may be placed on the inlet of the heating funnel 10 exposed above the embedding block 40. For example, the flow rate (a volume passing through a cross-sectional area per unit time) or discharge speed of the second material M2 discharged from the internal space of the heating funnel 10 through the second discharge nozzle 10a forming the bottom of the heating funnel 10 may be controlled by the pressure of gas RG filling the internal space of the heating funnel 10 sealed by the sealing cover 1 sealing the internal space of the heating funnel 10. For example, in an embodiment, the internal space of the heating funnel 10 may be filled with the metal flow melted from the metal block and the gas RG, e.g., the gas RG including air, that exerts a certain pressure on a liquid surface of the metal flow. In an embodiment, by controlling the pressure of the gas RG, the flow rate (a volume passing through a cross-sectional area per unit time) or discharge speed of the second material M2 discharged from the second discharge nozzle 10a forming the bottom of the heating funnel 10 may be controlled. For example, the gas RG filling the internal space of the heating funnel 10 may include an inert gas, and the flow rate (a volume passing through a cross-sectional area per unit time) or discharge speed of the metal flow may be controlled while preventing oxidation of the metal flow formed in the internal space of the heating funnel 10. As such, in an embodiment, the flow rate (a volume passing through a cross-sectional area per unit time) or discharge speed of the second material M2 in a liquid phase may be controlled by the pressure of the gas RG filling the internal space of the heating funnel 10, and the flow rate (a volume passing through a cross-sectional area per unit time) or discharge speed of the first material M1 in a paste-state or slurry-state may be controlled by the rotational speed of the rotary screw 85 rotating inside the transfer pipe 83 of the extrusion device 80. As such, in an embodiment, the flow rate (a volume passing through a cross-sectional area per unit time) or discharge speed of the first and second materials M1 and M2, each in a different material phase, that form the outline of the physical object and the physical object itself, respectively, may be controlled through different control mechanisms.

In an embodiment, the embedding block 40 and the heating chamber 50 may form one space where the embedding block 40 is fluidly connected to the heating chamber 50. For example, the space may be sealed from the assembly of the embedding block 40 and the heating chamber 50. In an embodiment, the internal space of the heating funnel 10 set to the second temperature T2 above the melting point of the metal block, the internal space of the discharge unit 20 set to the first temperature T1 lower than the melting point of the metal block and higher than room temperature, and the slow cooling space 50' accommodating the stage S on which the first and second materials M1 and M2 discharged from the first and second discharge nozzles 20a and 10a forming the bottom of the heating funnel 10 and the bottom of the discharge unit 20 are accumulated may form a space where the internal space of the heating funnel 10, the internal space of the discharge unit 20, and the slow cooling space 50' are connected for the flow of the first and second materials M1 and M2, and the space where the internal space of the heating funnel 10, the internal space of the discharge unit 20, and the slow cooling space 50' are connected may be insulated from the outside through assembly of the embedding block 40 and the heating chamber 50. For example, the embedding block 40 and the heating chamber 50 may form a sealing connection through the stepped interface (stepped assembly unit ST1) to block communication of internal heat or external cold air. In an embodiment, by installing different first and second heat sources 15 and 55, e.g., the first and second heat sources 15 and 55 that operate independently, in the embedding block 40 and heating chamber 50 which form a sealing connection, the embedding block 40 and the heating chamber 50 may form a sealing connection through the stepped interface (assembly units ST1 and ST2) therebetween to tightly seal and insulate the space, from the surrounding environment, formed by the embedding block 40 and the heating chamber 50, which are fluidly connected to each other for the discharge of the first and second materials M1 and M2 while independently controlling the temperature profiles of the second temperature T2 of the heating funnel 10 and the first temperature T1 of the discharge unit 20, each embedded in the embedding block 40, and the slow cooling temperature or a third temperature T3 for slow cooling of the physical object formed on the stage S. Throughout the specification, that a space formed by the embedding block 40 and the heating chamber 50 through assembly of the embedding block 40 and the heating chamber 50, e.g., a space where the internal space of the heating funnel 10, the internal space of the discharge unit 20, each embedded in the embedding block 40, and the slow cooling space 50' inside the heating chamber 50 are fluidly connected, is sealed or insulated to block the inflow and outflow of heat or cold air from the surrounding environment may assume that, for example, the inlet of the heating funnel 10 exposed above the embedding block 40 is sealed. In an embodiment, the sealing cover 1 may be placed on the inlet of the heating funnel 10. Since the connecting tube 70 connected to the discharge port 80a of the extrusion device 80 is fitted into the fitting end 20b of the discharge unit 20 exposed above the embedding block 40, the inlet of the heating funnel 10 and the fitting end 20b of the discharge unit 20, each exposed above the embedding block 40 may be insulated from the surrounding environment so that the inflow and outflow of internal heat or external cold air through the inlet of the heating funnel 10 and the fitting end 20b of the discharge unit 20, each exposed above the embedding block 40 is blocked.

In an embodiment, the assembly of the embedding block 40 and the heating chamber 50 may include a sealing connection between the embedding block 40 and the heating chamber 50. In an embodiment, the embedding block 40 and the heating chamber 50 may form a sealing connection through the stepped interface (assembly units ST1 and ST2). More specifically, the embedding block 40 may include the assembly unit ST1 for the assembly with the heating chamber 50 formed on the bottom wall of the embedding block 40 (lower block 42) that defines an upper part of the heating chamber 50, and the heating chamber 50 may include the partition walls 50a contacting stepped surfaces of the assembly unit ST1. For example, in an embodiment, the embedding block 40 may include an upper block 41 formed at a relatively high height to embed most of the heating funnel 10 and the discharge unit 20 and a lower block 42 formed with an expanded area from the upper block 41, and the assembly unit ST1 may be formed at the bottom of the lower block 42 for a sealing connection with the heating chamber 50. For example, in an embodiment, the assembly unit ST1 may include stepped surfaces formed along an edge of the lower block 42, and as the partition walls 50a of the heating chamber 50 is assembled upright so as to contact the stepped surfaces of the assembly unit ST1, the slow cooling space 50' surrounded by the lower block 42 of the embedding block 40 and the partition walls 50a of the heating chamber 50 may be formed. The second heat source 55 may be formed on the partition walls 50a of the heating chamber 50 forming the slow cooling space 50'. The second heat source 55 accommodated in a receiving channel 50‴ of the partition walls 50a forming the slow cooling space 50' may surround the stage S providing a support base for the physical object, and may control the cooling rate of the first and second materials M1 and M2 accumulated on the stage S from the first and second discharge nozzles 20a and 10a. More specifically, in an embodiment, by cooling the metal flow in a liquid phase filling the filling space FS surrounded by the outline of the physical object formed of the first material M1, the physical object itself in a solid phase may be formed, where the temperature profile (temperature profile of the third temperature T3) falling per hour may be gradually controlled to induce uniform cooling because thermal stress may accumulate locally depending on the deviation of the cooling rate of metal flow in a liquid phase that forms the physical object itself, and the second heat source 55 may control the temperature (third temperature T3) of the slow cooling space 50' accommodating the stage S where the first and second materials M1 and M2 are accumulated so that the heat treatment effect of annealing may be achieved. In an embodiment, the second heat source 55 may control the cooling rate of the second material M2 in a liquid phase so that the cooling rate of the second material M2 filling the filling space FS surrounded by the outline of the physical object formed of the first material M1 follows a gentle profile (temperature profile of the third temperature T3) per hour, and by controlling the temperature (third temperature T3) of the slow cooling space 50' that accommodates the stage S on which the first and second materials M1 and M2 are discharged together, the third temperature T3 of the slow cooling space 50' where the stage S from which the first and second materials M1 and M2 are discharged together is accommodated may be controlled to avoid the heat treatment effect of quenching on the second material M2 in contact with the first material M1, caused by the contact with the first material M1 at a relatively low temperature. In an embodiment, the second material M2 discharged at the second temperature T2 above the melting point of the metal block may be in a liquid phase and have relatively high fluidity, while the first material M1 in a paste-state or slurry-state with dispersed ceramic particles may have relatively low fluidity. Accordingly, the temperature of the first material M1 or the discharge unit 20 containing the first material M1 may be set to the first temperature T1 lower than the second temperature T2. For example, the temperature of the first material M1 or the discharge unit 20 containing the first material M1 may be set to a low temperature enough to prevent vaporization or volatilization of the matrix (e.g., H₂0 as a vehicle to impart fluidity to the ceramic particles) in which the ceramic particles are dispersed. For example, in an embodiment, the first temperature T1 of the first material M1 may be lower than the second temperature T2 of the second material M2, the first material M1 and the second material M2 discharged on the stage, where the first temperature T1 may correspond to a low temperature enough to prevent vaporization or volatilization of the matrix of the first material M1, and the third temperature T3 of the slow cooling space 50' may be set to a higher temperature than the first temperature T1 to form the outline of the physical object in a solid or near-solid phase through vaporization or volatilization of the matrix in which the ceramic particles are dispersed. For example, in an embodiment, the third temperature T3 of the slow cooling space 50' accommodating the stage S may be lower than the second temperature T2 of the second material M2 discharged onto the stage S or the second temperature T2 of the heating funnel 10 containing the second material M2 and may be higher than the first temperature T1 of the first material M1 discharged onto the stage S or the first temperature T1 of the discharge unit 20 containing the first material M1. In an embodiment, the second temperature T2 may correspond to the highest temperature above the melting point of the metal block in the three-dimensional printing apparatus including different spaces where different target temperatures (e.g., first to third temperature T1 to T3) are set, may be maintained constant over time by using a target temperature equal to or higher than the melting point of the metal block as input, and may be maintained at a constant temperature under the control of the first heat source 15. The first temperature T1 of the discharge unit 20 embedded with the first heat source 15 as a heat source and spaced apart from the heating funnel 10 or the first heat source 15 surrounding the outer surface of the heating funnel 10 may also be maintained constant over time similar to the second temperature T2, by interposing the thermal resistance formed by the insulation material of the embedding block 40 and fills the gap g between the first and second discharge nozzles 20a and 10a. For example, the first temperature T1 of the discharge unit 20 may also be maintained constant over time due to the insulating material of the embedding block 40 that fills the gap g between the first and second discharge nozzles 20a and 10a to provide the constant second temperature T2 and the constant thermal resistance.

As such, unlike the first temperature T1 and the second temperature T2 of the heating funnel 10 and the discharge unit 20, the third temperature T3 of the slow cooling space 50' of the heating chamber 50 may be controlled to have a gentle temperature profile over time, and may be set to a temperature that gradually decreases according to the temperature profile that changes over time to follow a preset gentle temperature profile through control of the second heat source 55, i.e., to induce the heat treatment effect of annealing while following the gentle temperature profile. Accordingly, the third temperature T3 of the slow cooling space 50' of the heating chamber 50 may correspond to a temperature that changes over time, unlike the first and second temperatures T1 and T2. As described above, the third temperature T3 may be lower than the second temperature T2 and higher than the first temperature T1, and may correspond to the highest temperature in a temperature profile that gradually decreases over time. For example, in an embodiment, the slow cooling space 50' of the heating chamber 50 may be maintained at the constant third temperature T3 during the period in which the discharge of the first material M1 continues, and may be maintained at a relatively high temperature suitable for vaporization or volatilization of the matrix of the first material M1 discharged onto the stage S, where the third temperature T3 may be gradually lowered while entering a slow cooling section that gradually lowers the third temperature T3. During the section in which the discharge of the first material M1 continues on the stage S (or the section in which the discharge of at least one of the first and second materials M1 and M2 continues), the third temperature T3 may be maintained at the highest temperature suitable for vaporization or volatilization of the matrix of the first material M1, and may enter the slow cooling section in which the third temperature T3 is gradually lowered after the exterior of the physical object is substantially formed as the discharge of the first material M1 is completed and the discharge of the second material M2 filling the filling space FS surrounded by the outline of the physical object of the first material M1 is completed. However, when the third temperature T3 of the slow cooling space 50' of the heating chamber 50 accommodating the stage S is lowered in the section where the discharge of the first and second materials M1 and M2 onto the stage S continues, the deviation of the cooling rate inside the physical object may be induced according to the cumulative order of each layer (e.g., each layer of the second material M2) discharged onto the stage S, and thermal stress or residual stress may be caused, contrary to the purpose of the gentle temperature profile of slow cooling to induce uniform cooling inside the physical object and to eliminate thermal stress or residual stress due to the deviation of the cooling rate.

In an embodiment, the three-dimensional printing apparatus may include different spaces controlled by the different first to third temperatures T1 to T3, and the first to third temperatures T1 to T3 may have a magnitude relationship as described above, where the first and second temperatures T1 and T2 may be maintained constant over time, while the third temperature T3 may follow a gentle temperature profile for slow cooling of the physical object, where the third temperature T3, compared with the first and second temperatures T1 and T2 which are kept constant, may correspond to the highest temperature (e.g., the highest temperature maintained in the section where the discharge of the first and second materials M1 and M2 continues) in a gentle temperature profile for slow cooling.

As described above, the embedding block 40 and the heating chamber 50 which are assembled in the vertical direction Z1 may be fluidly connected to each other to discharge the first and second materials M1 and M2. More specifically, the embedding block 40 and the heating chamber 50 may be fluidly connected to each other through the discharge hole 40" for the discharge of the first and second materials M1 and M2, where the discharge hole 40" may be formed in the lower block 42 connected to the upper block 41 that embeds most of the heating funnel 10 and the discharge unit 20, and may include two different discharge holes 40" connected to the first and second discharge nozzles 20a and 10a forming the bottom of each of the heating funnel 10 and the discharge unit 20.

In an embodiment, the embedding block 40 may include the upper block 41 formed at a relatively high height to embed most of the heating funnel 10 and the discharge unit 20, and the lower block 42 formed with an expanded area at a relatively low height below the upper block 41 to cover the slow cooling space 50' of the heating chamber 50. For example, in an embodiment, the upper block 41 and the lower block 42 may be formed in a generally hexahedral shape, where the upper block 41 may be formed at a relatively high height and the lower block 42 may be formed as an extended plate at a relatively low height from the upper block 41.

The first material M1 may include a composite material in a paste-state or slurry-state in which ceramic particles in a solid phase and a matrix in a liquid phase in which the ceramic particles are dispersed are mixed, where the ceramic particles may have a particle size, for example, on the µm scale. In an embodiment, the ceramic particles may include a mixture of ceramic particles having different sizes, and by mixing ceramic particles of different particle sizes, appropriate voids may be secured between the ceramic particles of different particle sizes, thereby providing space to accommodate the matrix. As the ceramic particles of different particle sizes accumulated on the stage S fill the voids, e.g., as ceramic particles of a relatively small particle size fill the voids between ceramic particles of a relatively large particle size, the first material M1, which is a mixture of ceramic particles of different particle sizes, may form the outline of the physical object with strong shape stability (e.g., height stability provided by the combination of particles of different sizes filling the voids) through vaporization or volatilization of the matrix. In an embodiment, the first material M1 may include H₂O as a matrix that accommodates ceramic particles in a solid phase and dispersed ceramic particles. In an embodiment, the matrix may include dispersed ceramic particles and provide fluidity to the ceramic particles. The first material M1 formed in a paste-state or slurry-state with dispersed ceramic particles may have lower fluidity than the second material M2 which is formed of metal or metal flow in a liquid phase, and to form a homogeneous mixture (or dispersion at a homogeneous concentration) of ceramic particles (solid phase) and the matrix (liquid or gel phase) which have different material phases, the matrix accommodating the ceramic particles, the first material M1 may be forcibly transferred through the discharge unit 20 including the first discharge nozzle 20a at the bottom through which the first material M1 is discharged using extrusion, and the connecting tube 70 connected to the fitting end 20b of the discharge unit 20.

In an embodiment, by introducing the metal block as a raw material (second raw material) of the second material M2 into the heating funnel 10 connected to the second discharge nozzle 10a through which the second material M2 is discharged and heating the heating funnel 10 above the melting point of the metal block, the metal flow in a liquid phase forming the second material M2 may be formed. For example, in an embodiment, the metal block as the raw material (second raw material) of the second material M2 may be formed in the shape of a disk with a low height and slimmed down size, the longest dimension of the metal block may correspond to a diameter of the disk, and a diameter of the metal block may be about 50 mm. In an embodiment, the heating funnel 10 that discharges the metal flow using the metal block as input may be formed in the shape of an approximately Y-shaped funnel, and the inner diameter of the second discharge nozzle 10a through which the metal flow is discharged may be smaller than the inner diameter of the inlet through which the metal block is introduced. In other words, the inner diameter of the inlet into which the metal block is introduced may be larger in size than the longest dimension of the metal block, while the inner diameter of the second discharge nozzle 10a through which the metal flow formed by melting the metal block in the heating funnel 10 is discharged may be smaller in size than the longest dimension of the metal block. More specifically, the longest dimension of the metal block may correspond to the diameter of the disk of the metal block in the shape of a disk, and when the diameter of the disk is about 50 mm, the inner diameter of the second discharge nozzle 10a may be about 0.1 mm to about 4 mm, e.g., about 1 mm to about 2 mm, which is less than about 50 mm which is the diameter of the disk in a solid phase.

In an embodiment, the first and second discharge nozzles 20a and 10a may be fixed in position while being embedded in the single embedding block 40 with a certain gap therebetween, and the first and second discharge nozzles 20a and 10a may be positioned adjacent to each other through the embedding block 40. For example, the heating funnel 10 and the discharge unit 20 respectively including the first and second discharge nozzles 20a and 10a at the bottom facing the stage S may be arranged to maintain a constant gap within the embedding block 40. For example, the heating funnel 10 may be formed in the shape of a Y-shaped funnel to maintain a constant gap at different levels in the height direction Z1, and the discharge unit 20 may extend in a diagonal direction simultaneously following the height direction Z1 and the radial directions Z2 and Z3 so as to be parallel to the outer surface of the heating funnel 10. For example, in an embodiment, the outer surface of the heating funnel 10 and the discharge unit 20 may extend in the diagonal direction that simultaneously follows the height direction Z1 and the radial directions Z2 and Z3, and may form the first and second discharge nozzles 20a and 10a at the bottom extending vertically in the height direction Z1 toward the stage S. For example, the heating funnel 10 may form a deformation point of the bottleneck to which the second discharge nozzle 10a is connected, and the discharge unit 20 may form a bending deformation point where the second discharge nozzle 20a is connected.

In an embodiment, the gap g between the first and second discharge nozzles 20a and 10a secured from the embedding block 40 may be about 3 mm to about 50 mm. For example, the gap g between the first and second discharge nozzles 20a and 10a may be about 25 mm. As described below, in an embodiment, the gap g between the first and second discharge nozzles 20a and 10a secured from the embedding block 40 may vary depending on the operation mode of the first and second discharge nozzles 20a and 10a. For example, unlike an operation mode in which the first and second discharge nozzles 20a and 10a are operated sequentially, in an operation mode in which the first and second discharge nozzles 20a and 10a are operated simultaneously, a gap formed between the discharge positions P1 and P2 of the first and second materials M1 and M2 discharged from the first and second discharge nozzles 20a and 10a, corresponding to the gap g between the first and second discharge nozzles 20a and 10a, may be filled by the metal flow in a liquid phase of the second material M2 discharged from the second discharge nozzle 10a. For example, the gap between the first and second discharge positions P1 and P2 may be filled by the metal flow of the second material which flows from the second discharge position P2 of the second material M2 to the first discharge position P1 of the first material M1. For example, in an embodiment, as the first and second materials M1 and M2 respectively forming the outline of the physical object and the physical object itself are discharged together onto the stage S according to the simultaneous operation of the first and second discharge nozzles 10a and 20a, the second material M2 which has relatively high fluidity, unlike the first material M1 which has low fluidity, may flow from the second discharge position P2 of the second material M2 toward the first discharge position P1 of the first material M1, and may not form voids inside the physical object while filling the filling space FS surrounded by the outline of the physical object formed from the first material M1. As such, in the operation mode in which the first and second discharge nozzles 20a and 10a are operated simultaneously, the first and second materials M1 and M2 discharged together from the first and second discharge nozzles 20a and 10a may come into contact with each other. Accordingly, in an embodiment, the first and second temperatures T1 and T2 of the first and second materials M1 and M2 may be controlled through the embedding block 40 that embeds the heating funnel 10 and the discharge unit 20 including the second and first discharge nozzles 10a and 20a at the bottom through which the first and second materials M1 and M2 are discharged, and through the embedding block 40 that embeds the first heat source 15 together with the heating funnel 10 and the discharge unit 20. In other words, the first and second temperatures T1 and T2, which are higher than room temperature but different from each other, may be controlled by the operation of the first heat source 15 and the insulation material of the embedding block 40 between the heating funnel 10 and the discharge nozzle 20 (rapid cooling of the second material M2 is prevented due to contact between the first and second materials M1 and M2).

For example, in the operation mode in which the first and second discharge nozzles 20a and 10a are operated simultaneously, the gap g between the first and second discharge nozzles 20a and 10a may be determined by the flow characteristics of the second material M2, such as the fluidity of the second material M2 discharged from the second discharge nozzle 10a (e.g., the viscosity of the second material M2 that determines the fluidity) and the flow rate of the second material M2 (e.g., the inner diameter of the second discharge nozzle 10a or the pressure of the second discharge nozzle 10a, etc., which influences the flow rate). For example, as the fluidity of the second material M2 increases and the flow rate of the second material M2 increases, the gap g between the first and second discharge nozzles 20a and 10a may be designed to increase. Although the gap g between the first and second discharge nozzles 20a and 10a increases slightly, the first and second discharge positions P1 and P2 of the first and second materials M1 and M2, corresponding to the gap g between the first and second discharge nozzles 20a and 10a, may be sufficiently filled based on the relatively high fluidity and flow rate. On the contrary, as the fluidity of the second material M2 decreases and the flow rate of the second material M2 decreases, the gap g between the first and second discharge nozzles 20a and 10a may be designed to decrease. Despite the relatively low fluidity and flow rate of the second material M2, the gap g between the first and second discharge nozzles 20a and 10a may be formed narrow enough to fully fill the gap between the first and second discharge positions P1 and P2 of the first and second materials M1 and M2, corresponding to the gap g between the first and second discharge nozzles 20a and 10a.

In an embodiment, the fluidity of the second material M2 may be controlled by the first heat source 15 for forming the second material M2 in a liquid phase using the metal block as input, and the flow rate of the second material M2 may be controlled by the pressure of the gas RG introduced into the inlet of the heating funnel 10 including the second discharge nozzle 10a at the bottom through which the second material M2 is discharged or the pressure of the gas RG applied to the liquid surface of the second material M2 at the inlet. For example, in an embodiment, the sealing cover 1 may cover the inlet of the heating funnel 10, and the gas RG to block oxidation of the second material M2 may be introduced between the sealing cover 1 and the liquid surface of the second material M2 filling the inlet. In addition, by controlling the pressure of the gas RG that pressurizes the liquid surface of the second material M2 toward the second discharge nozzle 10a, the flow rate of the second material M2 discharged from the second discharge nozzle 10a may be controlled.

In an embodiment, to avoid creating voids in the physical object to be modeled, it may be required to fill the gap between the first and second discharge positions P1 and P2 of the first and second materials M1 and M2 formed by the gap g between the first and second discharge nozzles 20a and 10a, and the gap g between the first and second discharge nozzles 20a and 10a may be designed to be narrow enough to fill the gap between the first and second discharge positions P1 and P2 of the first and second materials M1 and M2 based on the fluidity and flow rate of the second material M2 discharged from the second discharge nozzle 10a.

In an embodiment, for the purpose of reducing the maximum stroke to translationally move the stage S along a two-dimensional plane, the gap g between the first and second discharge nozzles 20a and 10a may be designed to be sufficiently narrow, to control the first and second discharge positions P1 and P2 of the first and second materials M1 and M2 discharged from the first and second discharge nozzles 20a and 10a onto the stage S as first and second target positions, respectively, using the sliced section data of the physical object to be modeled as input. In an embodiment, to form the same physical object, the first discharge position P1 of the first material M1 for forming the outline of the physical object on the stage S and the second discharge position P2 of the second material M2 for forming the physical object itself may be controlled as the same first and second target positions, respectively. As the gap g between the first and second discharge nozzles 20a and 10a increases, the stroke of the stage S for controlling the first and second discharge positions P1 and P2 as the same first and second target positions, respectively, may increase. In other words, as the gap g between the first and second discharge nozzles 20a and 10a increases, the stroke of the stage S required for manufacturing the same physical object needs to be expanded to a wide span. Conversely, as the gap g between the first and second discharge nozzles 20a and 10a decreases, the stroke of the stage S required for manufacturing the same physical object may be reduced to a narrow span. In other words, for the stroke of the stage S of the same span, the physical object with a larger volume may be produced. For example, that the stroke of the stage S is expanded to a wide span may refer to that the operation width or span of each of second and third actuators A2 and A3 for translational movement of the stage S on a two-dimensional plane needs to be expanded, and may also refer to that the size of the slow cooling space 50' that accommodates the stage S needs to be expanded wider. As a result, the cost of the printing apparatus increases while having the same manufacturing ability to form physical objects of the same size. For example, when the gap g between the first and second discharge nozzles 20a and 10a is designed differently, the transfer amount of the stage S required for the second discharge nozzle 10a to move to the target position where the first discharge nozzle 20a is located or for the second discharge nozzle 10a to move to the target position facing the first discharge nozzle 20a may be further shortened as the gap g between the first and second discharge nozzles 20a and 10a becomes narrower(referring to FIG.4).

In an embodiment, depending on the gap g between the first and second discharge nozzles 20a and 10a, the thermal resistance formed from the insulating material of the embedding block 40 that fills the gap g between the first and second discharge nozzles 20a and 10a may change, and thus, may affect the temperature difference between the first and second temperatures T1 and T2 of the heating funnel 10 and the discharge unit 20 including the first and second discharge nozzles 20a and 10a at the bottom from which the first and second materials M1 and M2 are discharged. For example, although the second temperature T2 of the heating funnel 10 may be directly controlled by the first heat source 15 surrounding the outer surface of the heating funnel 10, the first temperature T1 of the discharge unit 20 may be indirectly controlled by the gap from the heating funnel 10 or the gap from the first heat source 15 surrounding the outer surface of the heating funnel 10, and the first temperature T1 of the discharge unit 20 may be controlled by the gap between the heating funnel 10 and the discharge unit 20 extending parallel to each other, or the gap g between the first and second discharge nozzles 20a and 10a forming the bottom of heating funnel 10 and the bottom of the discharge unit 20, respectively. In an embodiment, the first temperature T1 of the discharge unit 20 where the first material M1 is discharged may be set to a temperature which is low enough to suppress vaporization or volatilization of the matrix contained in the first material M1 and high enough to not rapidly cool the second material M2 that forms the physical object itself while being in contact with the first material M1 that forms the outline of the physical object on the stage S. To control the first temperature T1 of the first material M1 to an appropriate level, the gap g between the first and second discharge nozzles 20a and 10a may be appropriately designed. For example, the gap g between the first and second discharge nozzles 20a and 10a may be formed wide enough to suppress vaporization or volatilization of the matrix contained in the first material M1 (vaporization or volatilization of the matrix is suppressed due to excessively high first temperature T1) by applying different approaches: 1) designing the gap g between the first and second discharge nozzles 20a and 10a to be narrow enough to shorten the stroke of the stage S to form the same physical object, and 2) appropriately designing the thermal resistance formed from the insulating material of the embedding block 40 embedded between the first and second discharge nozzles 20a and 10a.

In an embodiment, using the metal block in a solid phase as input, the heating funnel 10, which discharges the metal flow in a liquid phase, may be formed in the shape of an approximately Y-shaped funnel in which the inner diameter of the second discharge nozzle 10a through which the metal flow in a liquid phase is discharged is smaller than the inner diameter of the inlet into which the metal block in a solid phase is introduced. In an embodiment, that the heating funnel 10 is formed in the shape of a Y-shaped funnel may refer to that the cross-sectional area of the heating funnel 10 decreases from the inlet forming the top of the heating funnel 10 to the second discharge nozzle 10a forming the bottom of the heating funnel 10, and the heating funnel 10 has a funnel shape with a circular ring-shaped cross section from the inlet at the top of the heating funnel 10 to the second discharge nozzle 10a at the bottom thereof. For example, in an embodiment, the second discharge nozzle 10a may discharge the second material M2 through a circular cross-sectional area with a defined inner diameter. For example, the heating funnel 10 may be formed in a shape in which the inner diameter of the heating funnel 10 gradually decreases in the height direction Z1 from the inlet at the top to the second discharge nozzle 10a at the bottom, and the second discharge nozzle 10a may be formed to have a constant inner diameter while forming a bottleneck with a minimum inner diameter.

In an embodiment, the first heat source 15 for heating the metal block introduced into the heating funnel 10 to a melting point or higher may be wound around the outer surface of the heating funnel 10. In an embodiment, the first heat source 15 wound on the outer surface of the heating funnel 10 may have the highest second temperature T2 above the melting point of the metal block, and the second heat source 55 formed in the heating chamber 50 accommodating the stage S on which the second material M2 is discharged through the heating funnel 10 may have the third temperature T3 lower than the second temperature T2. For example, in an embodiment, the second temperature T2 may be set to a temperature higher than the melting point of the metal block, and the third temperature T3 may be set to a temperature lower than the second temperature T2 and high enough to facilitate vaporization or volatilization of the matrix containing a plurality of ceramic particles dispersed to form the first material M1 in a paste-state or slurry-state. In addition, the first temperature T1 of the discharge unit 20 containing the first material M1 which is lower than the second temperature T2 and the third temperature T3 may be set to a temperature which is higher than room temperature but low enough to suppress vaporization or volatilization of the matrix that provides fluidity to the first material M1. For example, the first temperature T1 of the discharge unit 20 may be kept lower than the third temperature T3 in the heating chamber 50 capable of inducing vaporization or volatilization of the matrix from the first material M1 accumulated on the stage S.

In an embodiment, the heating funnel 10 may include ceramic-based material that has electrical insulation, thermal insulation, and fire resistance. The first heat source 15 may be wound around the outer surface of the heating funnel 10, or may be continuously wound around the outer surface of the heating funnel 10 in a spiral shape. For example, the first heat source 15 may be provided as a heating wire wound around the outer surface of the heating funnel 10. In an embodiment, a concave receiving channel 40' for receiving the heating wire forming the first heat source 15 may be formed within the outer surface of the heating funnel 10 and/or the embedding block 40 facing the outer surface of the heating funnel 10, and the concave receiving channel 40' may be continuously formed in a spiral shape around the outer surface of the heating funnel 10. In an embodiment, the first heat source 15 may be provided as a heating wire wound around the outer surface of the heating funnel 10. As the first heat source 15 is wound around the outer surface of the heating funnel 10 with electrical insulation, it is possible to prevent the flow of metal flow contained in the heating funnel 10 from being disturbed by the electric current of the heating wire or electromagnetic force induced from the electric current. For example, in an embodiment, by forming electrical insulation between the internal space of the heating funnel 10 filled with the second material M2 and the outer surface of the heating funnel 10 on which the first heat source 15 is wound, the first heat source 15 may provide insulation to exclude electromagnetic influence, , e.g., electromagnetic influence that may disrupt the flow of metal flow, between the flow of metal flow filling the internal space of the heating funnel 10 and the heating wire wound on the outer surface of the heating funnel 10.

The first heat source 15 may be connected to a first switch to control the temperature (second temperature T2) of the internal space of the heating funnel 10, and the temperature of the internal space of the heating funnel 10 may be set to the second temperature T2 higher than the melting point of the metal block while turning on/off the operation of the heating wire through on/off control of the first switch. For example, a direct current (constant current) of a constant magnitude may flow through the first heat source 15 according to the on/off control of switch, and an intermittent flow of direct current of a constant magnitude may be formed from on/off control of the direct current of a constant magnitude. To generate electromagnetic force through the flow of alternating current and induce the intermittent flow of the second discharge nozzle 10a forming the bottom of the heating funnel 10, e.g., to induce dropping in the form of droplets, there may be differences from the configuration of a conductor to which alternating current is applied.

Similar to the heating funnel 10, the embedding block 40 may include a ceramic-based material having electrical insulation, thermal insulation, and fire resistance. The embedding block 40 may be formed in an approximately hexahedral shape, and the embedding block 40 formed in a hexahedral shape may include the upper block 41 formed at a relatively high height to embed most of the heating funnel 10 and the discharge unit 20 and the lower block 42 formed in the shape of a plate with an expanded area from the upper block 41. In addition, the extrusion device 80 connected to the discharge unit 20 via the connecting tube 70 between the fitting end 20b of the discharge unit 20 and the extrusion device 80 may be positioned in a stepped area formed between the upper block 41 and the lower block 42 of the embedding block 40, e.g., a stepped area formed between the upper surface of the lower block 42 and the side surface of the upper block 41.

The lower block 42 may form the slow cooling space 50' together with the partition walls 50a of the heating chamber 50, and more specifically, may define an upper part of the slow cooling space 50'. For example, the stepped assembly unit ST1 may be formed on four edges of the lower block 42 to form a stepped interface with the partition walls 50a of the heating chamber 50 and to be coupled to the partition walls 50a of the heating chamber 50. For example, as an upper edge of the partition wall 50a of the heating chamber 50 is assembled to come into contact with the stepped assembly unit ST1 of the lower block 42, a sealing connection may be formed between the heating chamber 50 and the lower block 42 through the stepped interface. In an embodiment, the heating chamber 50 may include a total of four partition walls 50a arranged to face each other in different second and third directions Z2 and Z3, and may form a sealing connection through the stepped assembly unit ST2, forming a stepped interface between the partition walls 50a that are assembled to each other to form an edge while contacting each other.

The heating chamber 50 may include a ceramic-based material having electrical insulation, thermal insulation, and fire resistance. The heating chamber 50 may be formed in a substantially hexahedral shape, and the stage S where the first and second materials M1 and M2 discharged from the first and second discharge nozzles 20a and 10a are accumulated may be accommodated in the slow cooling space 50' of the heating chamber 50 formed in a hexahedral shape. The heating chamber 50 may include four partition walls 50a surrounding the outer surface of the slow cooling space 50', and the four partition walls 50a forming the heating chamber 50 are assembled to come into contact with the assembly unit ST1 of the lower block 42 defining the upper part of the slow cooling space 50', thereby forming the heating chamber 50 which provides the slow cooling space 50'. The heating chamber 50 may further include a bottom wall 50b that defines a lower part of the slow cooling space 50' while providing an assembly position where the four partition walls 50a are seated. An opening 50" may be formed on the bottom wall 50b of the heating chamber 50 to allow power connection between the stage S and an actuator A (first to third actuators A1 to A3), and power connection between the stage S and the actuator A may be made as a connecting rod 100, which provides the power connection between the stage S and the actuator A that provides operation power to the stage S, passes through the opening 50".

The connecting rod 100 that provides power connection between the stage S and the actuator A (first to third actuators A1 to A3) may generate a three-dimensional movement of the stage S while following both the up-and-down movement of the actuator A and the translational movement on a two-dimensional plane. The link structure L connected to the bellows cover ZC may adaptively expand and contract a distance between the guide block GB (e.g., guide block GB of the third actuator A3) that goes up and down according to the operation of the actuator A (first to third actuators A1 to A3) and the bellows cover ZC that is placed on the bottom wall 50b of the heating chamber 50 and seals the opening 50" of the bottom wall 50b, and may permanently seal the opening 50" of the bottom wall 50b, regardless of the operation of the actuator A (first to third actuators A1 to A3), thereby blocking the inflow and outflow of internal heat and external cold air.

The opening 50" formed in the bottom wall 50b of the heating chamber 50 may be sealed, regardless of the up-and-down movement of the actuator A, by the bellows cover ZC that covers the opening 50", and the bellows cover ZC connected to the link structure L that extends parallel to the connecting rod 100 connecting the actuator A (e.g., guide block GB of the third actuator A3) to the stage S and adaptively expands and contracts a distance between the actuator A (e.g., guide block GB of the third actuator A3) and the bottom wall 50b of the heating chamber 50 may seal the opening 50" regardless of the up-and-down movement of the actuator A.

Although not shown in the drawings, the discharge unit 20 embedded in the embedding block 40 along with the heating funnel 10 may be formed of different materials. For example, the discharge unit 20 may be formed of different materials including a core part that forms the exterior of the discharge unit 20 including metal and a ceramic-based shell part that surrounds the core part. In an embodiment, the core part of metal forming the frame of the discharge unit 20 may form a smooth surface (or inner diameter) for the discharge of the first material M1, and may include metal such as stainless steel with excellent formability, while the shell part surrounding the core part including metal may include a ceramic-based material that has electrical insulation, thermal insulation, and fire resistance. In an embodiment, by forming the core part of the discharge unit 20 from metal, the temperature of the discharge unit 20 may be set to the first temperature T1 higher than room temperature due to heat transfer from the first heat source 15 surrounding the outer surface of the heating funnel 10, and by forming the ceramic-based shell part, surrounding the outer surface of the core part, which includes same or similar ceramic-based material as the embedding block 40 which embeds the heating funnel 10 together with the discharge unit 20 to form close contact with each other, separation of heterogeneous materials due to different material characteristics may be fundamentally excluded. For example, in an embodiment, by forming the heating funnel 10 and the discharge unit 20, which are embedded together in the embedding block 40, from the same or similar ceramic-based material as the embedding block 40, separation between different materials with different material properties may be prevented. Similarly, by forming the embedding block 40 and the heating chamber 50, which together form the slow cooling space 50' of the heating chamber 50 through close contact therebetween, from the same or similar ceramic-based material, the inflow and outflow of heat and cold air between the inside and outside of the slow cooling space 50' may be blocked through close contact therebetween.

In an embodiment, the embedding block 40 and the heating chamber 50 may be formed in a hexahedral shape to form a close connection with each other. In some embodiments, the embedding block 40 and the heating chamber 50 may be formed in various polygonal or rounded shapes other than a hexahedral shape. In an embodiment, the heating chamber 50 may accommodate the stage S that provides a support base for the physical object, and may provide a location where the physical object formed on the stage S is cooled. In an embodiment, the physical object may be formed using a method of forming the metal flow, as the second material M2 that forms the physical object itself, by heating and melting the metal block and filling the filling space FS surrounded by the outline of the physical object of the first material M1 with the metal flow formed as described above, and the physical object may be formed by cooling, or more specifically, slow cooling the metal flow in a liquid phase filling the filling space FS surrounded by the outline of the first material M1. As such, by cooling the metal flow in a liquid phase to form the physical object in a solid phase, internal defects such as voids inside the physical object may be removed. For example, the physical object with reduced internal defects such as voids may be formed, compared to a comparative example in which as the second material M2 that forms the physical object itself, the second material M2 in a paste-state or slurry-state, which is formed by mixing metal powder, a vehicle to provide fluidity, and a binder to control viscosity, is discharged onto the stage S to form the exterior of the physical object, and then the physical object in a solid phase is completed through sintering treatment on the second material M2 in a paste-state or slurry-state through laser irradiation.

In an embodiment, by filling the filling space FS surrounded by the first material M1 forming the outline of the physical object with the metal flow in a liquid phase and cooling the metal flow in a liquid phase to form the physical object in a solid phase, it is possible to form the physical object with reduced internal defects such as voids, and by facilitating the cooling of the physical object within the heating chamber 50 capable of controlling the third temperature T3 of the slow cooling space 50' so as to control the cooling rate of the physical object formed from the metal flow in a liquid phase, slow cooling of the physical object may be induced. In particular, the third temperature T3 of the slow cooling space 50' of the heating chamber 50 where the stage S that provides the support base for the physical object is accommodated may be controlled to control the cooling rate of the physical object, and residual stress, such as thermal stress, that can accumulate inside the physical object due to the cooling deviation depending on the location of the physical object may be resolved by cooling the physical object at a relatively low cooling rate where heat treatment of annealing can be performed. For example, the cooling rate at which heat treatment of annealing is performed may have a relatively gentle slope in the temperature profile that decreases per hour. In contrast, the cooling rate at which heat treatment of quenching is performed may indicate that the profile of the temperature falling per hour has a steep slope. Unlike the disclosure, when the cooling rate of the physical object is not controlled, e.g., cooling of the physical object is not slow as a gentle temperature profile, and the physical object is rapidly cooled, e.g., cooling is done at room temperature, or the physical object is rapidly cooled with a steep temperature profile, thermal stress or residual stress may be induced from a local temperature deviation inside the physical object as the heat treatment of quenching is performed rather than heat treatment of annealing. In addition, as a result of the heat treatment of quenching, the physical object may become very brittle and may be easily broken or damaged by external shock. In an embodiment, the physical object in a solid phase may be formed through slow cooling of the physical object, and by controlling the cooling rate of the physical object to a gentle temperature profile that allows heat treatment of annealing, the physical object may be cooled to a relatively uniform temperature without causing temperature deviations inside the physical object. Accordingly, residual stress such as thermal stress may not be caused and toughness that is strong against external impact may be provided, thereby forming a physical object with excellent impact resistance.

In an embodiment, slow cooling may be performed with a gentle temperature profile where heat treatment of annealing is performed, and for this purpose, the temperature (corresponding to the third temperature T3) of the internal space of the heating chamber 50 that accommodates the stage S on which cooling is performed may be controlled. In an embodiment, the second heat source 55 may be installed in the heating chamber 50, and the physical object may be slowly cooled at a controlled cooling rate through the operation of the second heat source 55. For example, in an embodiment, the first heat source 15 and the second heat source 55 may be operated simultaneously or nearly simultaneously, and thus, the temperature of the internal space of the heating funnel 10 (corresponding to the second temperature T2) may be increased to a high temperature above the melting point of the metal block and maintained by the first heat source 15, and the metal flow in a liquid phase discharged from the heating funnel 10 may be slowly cooled, according to a gentle temperature profile, by the second heat source 55. For example, in some embodiments, although it is possible to operate the first and second heat sources 15 and 55 sequentially, the first and second heat sources 15 and 55 may be operated or initiated simultaneously or nearly simultaneously, e.g., so that the temperature control of the slow cooling space 50" (temperature control for the third temperature T3) for receiving the metal flow of the second material M2 melted by the first heat source 15 is not delayed. In addition, to prevent rapid cooling of the second material M2 discharged onto the stage S accommodated in the slow cooling space 50' and to provide a temperature environment suitable for vaporizing or volatilizing the matrix of the first material M1, the first and second heat sources 15 and 55 may be operated simultaneously. However, the first and second heat sources 15 and 55 each have different target set temperatures. For example, the first heat source 15 may be controlled so that the second temperature T2 is maintained constant above the melting point of the metal block, while the second heat source 55 may be controlled so that the third temperature T3 changes along a gentle temperature profile per hour to control the cooling rate of the physical object. In an embodiment, the first and second heat sources 15 and 55 may operate independently from each other.

The second heat source 55 is operated separately from the first heat source 15 to cool the internal temperature of the heating chamber 50 at a slow cooling rate suitable for heat treatment of annealing. For example, in an embodiment, the first heat source 15 and the second heat source 55 may be connected to separate first and second switches to be controlled on/off, and PID control for the first heat source 15 and the second heat source 55 may be performed using the set second temperature T2 which is constant or the temperature calculated from the set cooling rate (third temperature T3 varying with time) as a target temperature value.

In an embodiment, the physical object in a solid phase may be formed by discharging the second material M2 of metal flow and slowly cooling the second material M2 accumulated on the stage S. The first heat source 15 may be operated to discharge the second material M2 that forms the physical object itself, i.e., to melt the metal block as the second material M2, and the second heat source 55 may be operated to slowly cool the second material M2 accumulated on the stage S. In some embodiments, the first and second heat sources 15 and 55 may be operated simultaneously or sequentially. In addition, after the physical object is shaped by filling the second material M2 into the filling space FS surrounded by the outline of the physical object of the first material M1 formed on the stage S, i.e., after the discharge of the second material M2 from the heating funnel 10 is completed, the operation of the first heat source 15 may be terminated, and the operation of the second heat source 55 may be continued thereafter to control the cooling rate of the physical object in the slow cooling space 50'. For example, in an embodiment, the first and second heat sources 15 and 55 may be operated simultaneously, or the second heat source 55 may be operated continuously while the operation of the first heat source 15 is stopped. In other words, during the takt-time to complete one physical object, the operation time of the first heat source 15 (first operation time) may be shorter than the operation time of the second heat source 55 (second operation time). For example, the second heat source 55 may be operated during the entire takt-time of three-dimensional printing, whereas the first heat source 15 may be operated for a shorter time than the entire takt-time of three-dimensional printing. For example, in an embodiment, the operation time of the second heat source 55 (second operation time) may include a slow cooling time for slowly cooling the physical object to follow a gentle temperature profile. Since the operation time of the second heat source 55 (second operation time) includes the slow cooling time which accounts for a significant portion of the entire takt-time, the operation time of the second heat source 55 (second operation time) may be set longer than the operation time of the first heat source 15 (first operation time) which does not include the slow cooling time.

Similar to the first heat source 15, the second heat source 55 may be connected to a second switch to control the third temperature T3 of the internal space of the heating chamber 50, and may control the third temperature T3 of the internal space of the heating chamber 50 while turning on/off the operation of the heating wire through on/off control of the second switch. For example, a direct current (constant current) of a constant magnitude may flow through the second heat source 55 according to on/off control of switch, and an intermittent flow of the direct current of a constant magnitude may be formed by the on/off control of the direct current of a constant magnitude.

In an embodiment, as the second heat source 55 maintains the third temperature T3 of the slow cooling space 50' of the heating chamber 50 at a temperature higher than room temperature, it is possible to provide an environment favorable for increasing and maintaining the temperature (corresponding to the second temperature T2) of the internal space of the heating funnel 10 connected to the slow cooling space 50' to form one space above the melting point of the metal block. In this sense, by simultaneously operating the first and second heat sources 15 and 55, it is possible to reduce power consumption for maintaining the temperature of the space formed within the embedding block 40 and the heating chamber 50 fluidly connected to each other at a temperature higher than at least room temperature.

The first and second discharge nozzles 20a and 10a through which the first and second materials M1 and M2 are discharged are located at a height that varies from the stage S according to the up-and-down movement of the stage S. As the first and second discharge nozzles 20a and 10a are embedded in the embedding block 40 that forms the slow cooling space 50' in which the stage S is accommodated, more specifically, as the first and second discharge nozzles 20a and 10a are embedded in the embedding block 40 defining the upper part of the slow cooling space 50', depending on the relative assembly position between the embedding block 40 and the heating chamber 50, the first and second discharge nozzles 20a and 10a may be positioned and fixed at a certain fixed position with respect to the heating chamber 50. In an embodiment, the positions of the first and second discharge nozzles 20a and 10a may be fixed at a certain fixed position with respect to the heating chamber 50. According to the up-and-down movement and translational movement on a two-dimensional plane of the connecting rod 100 for power connection through the opening 50" penetrating the bottom wall 50b of the heating chamber 50 or the guide block GB (e.g., the guide block GB of the third actuator A3 reflecting both the up-and-down movement generated from the first to third actuators A1 to A3 and the translational movement on a two-dimensional plane) to which the connecting rod 100 is connected, the stage S connected to the actuator A may be transferred to the target discharge positions P1 and P2 of the first and second materials M1 and M2, with respect to the first and second discharge nozzles 20a and 10a maintaining a constant fixed position within the heating chamber 50.

In some embodiments, through relative transfer between the first and second discharge nozzles 20a and 10a and the stage S, the first and second materials M1 and M2 discharged from the first and second discharge nozzles 20a and 10a may be accumulated at the first and second discharge positions P1 and P2 on the stage S. For example, the first and second discharge positions P1 and P2 where the first and second materials M1 and M2 are accumulated on the stage S may correspond to the outline position of the physical object and the filling position corresponding to the physical object itself and surrounded by the outline of the physical object, respectively. In an embodiment, the first and second materials M1 and M2 accumulated on the stage S from the first and second discharge nozzles 20a and 10a may have different material phases from the first and second raw materials that are the raw materials for the first and second materials M1 and M2, respectively, where the first and second raw materials may be formed into the first and second materials M1 and M2 through different pretreatment processes. The pretreatment processes may be performed by the extrusion device 80 (pretreatment of mixing/extrusion) and the heating funnel 10 (pretreatment of heating), each including the first and second discharge nozzles 20a and 10a or connected to the first and second discharge nozzles 20a and 10a. In an embodiment, considering the connectivity between the first and second discharge nozzles 20a and 10a and the extrusion device 80 and the heating funnel 10, the stage S on which the first and second materials M1 and M2 are accumulated may be transferred from the first and second discharge nozzles 20a and 10a, while fixing the position of the first and second discharge nozzles 20a and 10a. By transferring the stage S on which the first and second materials M1 and M2 are discharged from the first and second discharge nozzles 20a and 10a whose positions are fixed, it is possible to control the discharge positions P1 and P2 of the first and second materials M1 and M2 at which the first and second materials M1 and M2 are discharged on the stage S, and deposit the first and second materials M1 and M2 at the outline position of the physical object to be modeled and the filling position surrounded by the outline of the physical object.

In some embodiments, the first and second discharge nozzles 20a and 10a may be operated sequentially or simultaneously. For example, the physical object may be formed by operating the first discharge nozzle 20a, among the first and second discharge nozzles 20a and 10a embedded together in the embedding block 40 and fixed in position, to accumulate the outline of the physical object first, stopping the operation of the first discharge nozzle 20a, and then operating the second discharge nozzle 10a to subsequently fill with the second material M2 the filling space FS surrounded by the outline of the physical object of the first material M1. For example, in the forming of such a physical object, the first and second discharge nozzles 20a and 10a may be operated and stopped alternately to form each layer of the physical object. While the first discharge nozzle 20a is in operation (while the second discharge nozzle 10a is stopped), the stage S may be transferred based on section data about the outline of the physical object formed from the first material M1 discharged from the first discharge nozzle 20a, and while the second discharge nozzle 10a is in operation (while the first discharge nozzle 20a is stopped), the stage S may be transferred based on section data about the physical object itself formed from the second material M2 discharged from the second discharge nozzle 10a or the filling space FS surrounded by the outline of the first material M1.

In an embodiment, the first and second discharge nozzles 20a and 10a may be operated simultaneously, not sequentially. For example, the first and second discharge nozzles 20a and 10a may be embedded by one embedding block 40 and bound at a certain gap from each other, and the first and second discharge positions P1 and P2 of the first and second materials M1 and M2 discharged from the first and second discharge nozzles 20a and 10a at different positions on the stage S may be spaced apart from each other by the gap g between the first and second discharge nozzles 20a and 10a. For example, the first and second discharge positions P1 and P2 of the first and second materials M1 and M2 on the stage S may be formed with a gap corresponding to the gap g between the first and second discharge nozzles 20a and 10a embedded together in the embedding block 40 and bound to each other. The gap between the first and second discharge positions P1 and P2 of the first and second materials M1 and M2 on the stage S may be filled with the metal flow of the second material M2 flowing from the second discharge position P2 of the second material M2 toward the first discharge position P1 of the first material M1.

In an embodiment, the gap g between the first and second discharge nozzles 20a and 10a bound by the embedding block 40 may be formed to be narrow enough to fill the gap between the first and second discharge positions P1 and P2 of the first and second materials M1 and M2 corresponding to the gap g between the first and second discharge nozzles 20a and 10a, e.g., based on the flow characteristics of the second material M2, such as the fluidity and flow rate of the second material M2.

In an embodiment, the first and second discharge nozzles 20a and 10a for discharging the first and second materials M1 and M2 having different material phases onto the stage S may be formed with different inner diameters depending on the different material phases of the first and second materials M1 and M2, and the first and second materials M1 and M2 may be discharged onto the stage S from the first and second discharge nozzles 20a and 10a formed with different inner diameters. In an embodiment, the first discharge nozzle 20a may discharge the first material M1 in a paste-state or slurry-state, and the second discharge nozzle 10a may discharge the second material M2 in a liquid phase. In an embodiment, as the inner diameter of the first discharge nozzle 20a through which the first material M1 in a paste-state or slurry-state with relatively low fluidity is discharged is formed relatively wider than the inner diameter of the second discharge nozzle 10a through which the second material M2 in a liquid phase with relatively high fluidity is discharged, the flow rates of the first and second materials M1 and M2 may be accumulated on the stage S in a balanced manner. For example, although the volume of the second material M2, which fills the filling space FS surrounded by the outline of the physical object and forms the physical object itself, is relatively larger than the volume of the first material M1 that forms the outline of the physical object, a sufficient volume of the second material M2 in a liquid phase with high fluidity may be accumulated to form the physical object itself through the relatively narrow inner diameter of the second discharge nozzle 10a.

In an embodiment, the flow rate (a volume passing through a cross-sectional area per unit time) or discharge speed of the first and second materials M1 and M2 in different material phases may be controlled in different ways. For example, the flow rate (a volume passing through a cross-sectional area per unit time) or discharge speed of the first material M1 may be controlled by the rotational speed of the rotary screw 85, which is rotationally driven inside the transfer pipe 83 of the extrusion device 80. On the contrary, the flow rate (a volume passing through a cross-sectional area per unit time) or discharge speed of the second material M2 may be controlled by the internal pressure of the heating funnel 10 filled with the second material M2 or internal pressure acting on the liquid surface formed in the heating funnel 10 (pressure of the gas RG filling a space between the sealing cover 1 covering the top of the inlet and the liquid surface of the second material M2).

In an embodiment, by forming the second material M2, which forms a physical object to be modeled, from metal or metal flow in a liquid phase with high fluidity, it is possible to form a physical object with a smooth and beautiful exterior, compared to the three-dimensional printing method of the comparative example in which the physical object itself is formed by using the second material M2 in a paste-state or slurry-state containing metal powder, and a vehicle and a binder which are mixed with the metal powder.

In an embodiment, the outline of the physical object and the physical object itself may be formed by using the first and second materials M1 and M2 in different material phases to have different fluidity. For example, to limit the flow of the second material M2 in a liquid phase while forming the filling space FS filled with the second material M2 in a liquid phase, the first material M1 forming the outline of the physical object may have relatively low fluidity so as to have height and shape stability without collapsing under its own weight, and unlike the first material M1, the second material M2 may have relatively high fluidity so as to quickly fill the inside of the outline of the physical object formed of the first material M1. As such, in an embodiment, since the physical object is formed by filling the filling space FS surrounded by the outline formed by the first material M1 with the metal flow in a liquid phase having high fluidity, all or part of the physical object may be formed all at once through one filling up to the height where the section data remains the same, and the time to manufacture the physical object may be reduced, compared to the comparative example in which the physical object is formed using a method of solidifying the physical object of the second material M2 by dropping the second material M2 in a paste-state or slurry-state containing a binder in which metal powder is dispersed in the form of droplets onto the stage S to form each layer of the second material M2 corresponding to a section of the physical object, accumulating each layer of the second material M2 up to the entire height of the physical object, and then sintering the same through laser irradiation. For example, in the three-dimensional printing of the comparative example as described above, each layer of the second material M2 is accumulated up to the entire height of the physical object by dropping the second material M2 in the form of droplets onto the stage S. Thus, compared to the disclosure, which fills the filling space FS surrounded by the outline of the physical object of the first material M1 with the second material M2 of liquid or metal flow on the stage S, the production time of the physical object may be relatively delayed. In particular, since a sintering process using separate laser irradiation is performed even after forming the height of the physical object on the stage S by dropping the second material M2 in the form of droplets, not only separate laser equipment is required, but also the production time is delayed, compared to the disclosure, which completes the physical object through cooling of the second material M2 after filling the filling space FS with the second material M2.

In an embodiment, the first material M1 in a paste-state or slurry-state in which ceramic particles and a matrix as a vehicle to provide fluidity are mixed may be used to form the outline of the physical object. More specifically, it takes more time to discharge the first material M1 in a paste-state or slurry-state, which forms the outline of the physical object, on the stage S to form a unit volume, compared to the second material M2 which forms the physical object itself of metal flow in a liquid phase with high fluidity (for example, when comparing the time for discharging the first material M1 to form a unit volume of the first material M1 to the time for discharging the second material M2 to form a unit volume of the second material M2, the time for discharging the first material M1 is longer than the time for discharging the second material M2). Nevertheless, in an embodiment, since the physical object is formed by using a method in which the second material M2 that forms the physical object itself fills the filling space FS surrounded by the outline of the physical object of the first material M1, the total time required to produce the physical object may not be delayed or may be determined depending on the time for discharging the first material M1, which has relatively low fluidity. Generally, the volume occupied by the physical object itself may be larger than the volume occupied by the outline of the physical object, and thus, regarding the total time required to produce the physical object, the time for discharging the second material M2 to form the physical object itself surrounded by the outline of the physical object may be understood as a limiting factor, rather than the time for discharging the first material M1 to form the outline of the physical object. Accordingly, although the first discharge time for forming a unit volume of the first material M1 is longer than the second discharge time for forming a unit volume of the second material M2, the time for discharging the second material M2, which occupies a relatively large volume, may be a limiting factor that limits the total time required to manufacture the overall physical object. In an embodiment, by applying the metal flow in a liquid phase with relatively high fluidity as the second material M2, which acts as a limiting factor for the total time for manufacturing the physical object, the time for discharging the second material M2 may be shortened, and thus the total time required to manufacture the physical object may be shortened. Unlike the disclosure, in the comparative example, a material in a paste-state or slurry-state that has relatively low fluidity than a liquid phase is used as the material for forming the physical object itself. Thus, the time for discharging the second material M2, which acts as a limiting factor for the total time required to produce the physical object, may be delayed, and the total time required to produce the physical object may also be relatively delayed.

In an embodiment, the first material M1 may be extruded from the extrusion device 80, where different ceramic particles and a matrix for providing fluidity to the ceramic particles, as raw material (first raw material) of the first material M1, respectively introduced from first and second hoppers 81 and 82 connected to the transfer pipe 83 may be formed as a homogeneous mixture by the rotation of the rotary screw 85 which rotates within the transfer pipe 83 of the extrusion device 80, and the transfer speed of the first material M1 may be controlled by the rotational speed of the rotary screw 85. For example, in an embodiment, the rotational speed of the rotary screw 85 rotated within the transfer pipe 83 of the extrusion device 80 may be linked to the transfer speed of the first material M1 transported along the connecting tube 70 connected between the discharge port 80a of the extrusion device 80 and the fitting end 20b of the discharge unit 20, and may be linked to the flow rate (a volume passing through a cross-sectional area per unit time) or discharge speed of the first discharge nozzle 20a forming the bottom of the discharge unit 20 through the discharge port 80a, where one end of the connecting pipe 70 is connected, and the discharge unit 20, where the other end of the connecting tube 70 is connected. In an embodiment, while forming the first material M1 in a paste-state or slurry-state in which ceramic particles and a matrix are mixed, for example, the mixing ratio of the matrix to provide fluidity to the ceramic particles may be controlled, and the flow rate (a volume passing through a cross-sectional area per unit time) or discharge speed of the first material M1 may be controlled through forced extrusion.

In an embodiment, while forming the first material M1 in a paste-state or slurry-state in which ceramic particles and a matrix such as a vehicle and a binder are mixed, for example, it is possible to form the first material M1 having a relatively high viscosity by adjusting the ratio of the binder or the components of the binder for controlling the viscosity of the first material M1, and to control the flow rate (a volume passing through a cross-sectional area per unit time) or discharge speed of the first material M1 through forced extrusion. For example, in an embodiment, the first material M1 may be discharged onto the stage S by forced extrusion to control the flow rate (a volume passing through a cross-sectional area per unit time) or discharge speed of the first material M1, separate from the viscosity of the first material M1, while increasing the height stability of the first material M1 accumulated on the stage S by forming the first material M1 having relatively high viscosity.

In an embodiment, in the forced extrusion of the first material M1, the flow rate (a volume passing through a cross-sectional area per unit time) or discharge speed at the first discharge nozzle 20a connected to the discharge port 80a of the extrusion device 80 may be controlled by increasing or decreasing the rotational speed of the rotary screw 85 driven inside the transfer pipe 83 of the extrusion device 80. On the contrary, in the comparative example in which the first material M1 in a paste-state or slurry-state is dropped in the form of droplets, by controlling the ratio or components of the binder contained in the first material M1, the height stability of the first material M1 accumulated on the stage S is increased. In this case, since the flow rate (a volume passing through a cross-sectional area per unit time) or discharge speed of the first material M1 is delayed in conjunction with the viscosity of the first material M1, it is necessary to compromise between the height stability of the first material M1 and the flow rate (a volume passing through a cross-sectional area per unit time) or discharge speed of the first material M1. For example, unlike an embodiment, there may be a limit to shortening the takt-time by increasing the flow rate (a volume passing through a cross-sectional area per unit time) or discharge speed of the first material M1 while increasing the height stability of the first material M1. For example, in an embodiment, by increasing the height stability of the first material M1, the time for manufacturing the physical object may be shortened by filling the high filling space FS, surrounded by the relatively high outline of the first material M1, with the metal flow in a liquid phase at once. In addition, by shortening the time for discharging the first material M1, e.g., together with increasing the rotational speed of the rotary screw 85 driven within the transfer pipe 83 of the extrusion device 80, the time for forming the outline of the first material M1 may also be shortened, thereby shortening the takt-time.

In an embodiment, that the first material M1 forms the outline of the physical object to surround the filling space FS filled with the second material M2 in a liquid phase and the second material M2 fills the filling space FS surrounded by the outline of the first material M1 so that the second material M2, not the first material M1, forms a physical object through subsequent cooling may refer to that the physical object is completed by separating the first material M1 from the second material M2 after cooling the second material M2.

In some embodiments, that the second material M2 formed of the metal flow in a liquid phase fills the filling space FS surrounded by the outline of the first material M1 does not limit the discharge order of the first and second materials M1 and M2 does not necessarily mean that, for example, the filling space FS surrounded by the outline of the first material M1 is filled with the second material M2 after the outline of the physical object is formed through the discharge of the first material M1. For example, in some embodiments, the first and second materials M1 and M2 may be discharged toward the stage S which provides the support base for the physical object simultaneously, not sequentially. For example, although the first and second materials M1 and M2 are discharged simultaneously toward the stage S, the first material M1 may not spread widely from the discharge position P1 of the first material M1 onto the stage S, and may be limited to the vicinity of the discharge position P1 of the first material M1, according to the differential fluidity of the first and second materials M1 and M2. Accordingly, the outline of the physical object formed by the first material M1 may be clearly defined with height stability. For example, in an embodiment, as the first material M1 is formed in a paste-state or slurry-state in which ceramic particles, and a matrix such as a vehicle and a binder for viscosity control are mixed, the first material M1 may have relatively low fluidity compared to the second material M2, and thus have height stability based on the low fluidity. For example, in an embodiment, by controlling the fluidity of the first material M1, the height stability of the first material M1 may be secured. By quickly filling the filling space FS surrounded by the outline of the first material M1 with the second material M2 formed of metal flow in a liquid phase while forming the height of the outline formed by the first material M1 relatively high, the time for manufacturing the three-dimensional printing apparatus according to an embodiment may be shortened. For example, in an embodiment, the two-dimensional section data of the physical object may form all or part of the physical object from a single discharge of the first and second materials M1 and M2 up to the same height.

The three-dimensional printing apparatus according to an embodiment may include a control unit (not shown) for obtaining data on the outline of the physical object and controlling the operation of the stage S, wherein the control unit may transfer the stage S on which the first and second materials M1 and M2 are accumulated at a relatively low speed so that the first and second materials M1 and M2 are accumulated to a height where the section data of the physical object remains the same by a single discharge (single layer) of the first and second materials M1 and M2. For example, the stage S on which the first and second materials M1 and M2 are accumulated may be transferred at a relatively low speed to form the height of the physical object by accumulating a relatively large volume or relatively large flow rate of the first and second materials M1 and M2 at the first and second discharge positions P1 and P2 where the first and second materials M1 and M2 are accumulated on the stage S.

In an embodiment, the first and second raw materials in a different form from the first and second materials M1 and M2 discharged onto the stage S may be introduced into the three-dimensional printing apparatus. Since separate processes are required to process the first and second materials M1 and M2 from the different first and second raw materials, by considering the connection with the heating funnel 10 and the extrusion device 80 that perform the pretreatment processes, maintaining the fixed positions of the first and second discharge nozzles 20a and 10a, transferring the stage S accommodating the first and second materials M1 and M2 from the first and second discharge nozzles 20a and 10a, instead of transferring the first and second discharge nozzles 20a and 10a, and controlling the first and second discharge positions P1 and P2, the outline of the physical object and the shape of the physical object surrounded by the outline may be formed.

The three-dimensional printing apparatus according to an embodiment may include a first actuator A1 for up-and-down movement of the stage S in the height direction Z1, and second and third actuators A2 and A3 for translational movement of the stage S in the second and third directions Z2 and Z3 along a two-dimensional plane, where the first to third actuators A1 to A3 may control the three-axis position of the stage S independently of each other, and, for example, may be controlled to independently follow the target position of the stage S in the first to third directions Z1 to Z3. In an embodiment, the second actuator A2 mounted on the guide block GB of the first actuator A1 may follow the position in the second direction Z2 targeted by the second actuator A2 based on the position in the first direction Z1 targeted by the first actuator A1. The third actuator A3 mounted on the guide block GB of the second actuator A2 may also follow the position in the third direction Z3 targeted by the third actuator A3 based on the positions in the first and second directions Z1 and Z2 targeted by the first and second actuators A1 and A2. As a result, through the connecting rod 100 mounted on the guide block GB of the third actuator A3, the stage S connected to the guide block GB of the third actuator A3 may three-dimensionally follow the positions in the first to third directions Z1 to Z3 followed by the first to third actuators A1 to A3.

In an embodiment, the embedding block 40, the heating chamber 50, and the actuator A may be aligned with each other through assembly guide rods R. For example, in an embodiment, the embedding block 40 and the heating chamber 50 may be formed in an approximately hexahedral shape, and the set of assembly guide rods R extending across the embedding block 40 and four corners of the heating chamber 50 may achieve positional alignment between the embedding block 40 and the heating chamber 50. For example, four side walls of the heating chamber 50 defining the side surfaces of the slow cooling space 50' and the embedding block 40 defining the upper part of the slow cooling space 50' accommodating the stage S may be aligned with each other to form an airtight sealing connection with each other. In addition, in an embodiment, through positional alignment of the set of assembly guide rods R between the heating chamber 50 and the actuator A disposed outside the heating chamber 50, the set of assembly guide rods R may align the actuator A positioned outside the heating chamber 50, the embedding block 40 assembled with the heating chamber 50, and the first and second discharge nozzles 20a and 10a embedded in the embedding block 40, thereby precisely controlling the discharge positions P1 and P2 of the first and second materials M1 and M2 discharged from the first and second discharge nozzles 20a and 10a onto the stage S.

According to the disclosure, provided is a three-dimensional printing apparatus capable of forming a physical object with reduced internal defects such as voids and thermal stress while also forming a physical object with a smooth surface and a beautiful exterior.

In some embodiments, the smallest dimension of the physical object is at least 0.05 mm, 0.1 millimeters (mm), 0.2 mm, 0.5 mm, 1 mm, 1.5 mm, 2 mm, 3 mm, 4 mm, 5 mm, 6 mm. 7 mm, 8 mm, 9 mm, 10 mm, or any value therebetween. In some embodiments, the largest dimension of the physical object does not exceed 100 m, 50 m, 10 m, 5 m, 1000 mm, 900 mm, 800 mm, 700 mm, 600 mm, 500 mm, 400 mm, 300 mm, 250 mm, or any value therebetween. In some embodiments, the physical object is a functional object. For example, in some embodiments, the physical object is a medical device, or a component of a medical device. In some embodiments, the physical object is an orthopedic device. In some embodiments, the physical object is a component of an orthopedic device. In some embodiments, the physical object is an aesthetic object.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the disclosure as defined by the following claims.

## Claims

1. A three-dimensional printing apparatus, the three-dimensional printing apparatus comprising: a stage providing a support base for a physical object to be modeled;
first and second discharge nozzles provided on the stage and discharging a first material in a paste-state or slurry-state that forms an outline of the physical object and a second material in a liquid phase that fills a filling space surrounded by the outline of the physical object formed from the first material, respectively;
an extrusion device for extruding the first material toward the first discharge nozzle, the extrusion device being connected to the first discharge nozzle and discharging the first material in a paste-state or slurry-state, which is a mixture of ceramic particles and a matrix in which the ceramic particles are dispersed;
a heating funnel connected to the second discharge nozzle and receiving a metal block and melting the metal block, such that the second material of metal flow in a liquid phase which is the molten metal block is discharged through the second discharge nozzle; and
a heating chamber for accommodating the stage and providing a slow cooling space for the first and second materials accumulated on the stage from the first and second discharge nozzles.

2. The three-dimensional printing apparatus of claim 1,
wherein an inner diameter of the second discharge nozzle is less than a longest dimension of the metal block introduced into an inlet at the top of the heating funnel connected to the second discharge nozzle at the bottom thereof.

3. The three-dimensional printing apparatus of claim 1,
wherein a first heat source for melting the metal block introduced into the heating funnel is wound around an outer surface of the heating funnel.

4. The three-dimensional printing apparatus of claim 3,
wherein the first heat source is located between the heating funnel where the second discharge nozzle is formed at the bottom facing the stage and a discharge unit where the first discharge nozzle is formed at the bottom facing the stage.

5. The three-dimensional printing apparatus of claim 1, further comprising
an embedding block for embedding the first and second discharge nozzles together.

6. The three-dimensional printing apparatus of claim 1,
wherein a third temperature of the slow cooling space of the heating chamber is lower than a second temperature of the heating funnel where the second discharge nozzle is formed at the bottom facing the stage and is higher than a first temperature of the discharge unit where the first discharge nozzle is formed at the bottom facing the stage, satisfying a relationship that the second temperature > the third temperature > the first temperature.

7. The three-dimensional printing apparatus of claim 1, further comprising:
a first heat source wound around the outer surface of the heating funnel and configured to melt the metal block introduced into the heating funnel; and
a second heat source formed in the heating chamber to control the cooling rate of the first and second materials accumulated on the stage from the first and second discharge nozzles.

8. The three-dimensional printing apparatus of claim 7,
wherein, during the takt-time to form a physical object,
a first operation time from the start to the end of operation of the first heat source is shorter than a second operation time from the start to the end of operation of the second heat source.

9. The three-dimensional printing apparatus of claim 1,
wherein a flow rate of the first material discharged onto the stage from the first discharge nozzle is controlled by the rotational speed of a rotary screw driven inside a transfer pipe of the extrusion device, and
a flow rate of the second material discharged onto the stage from the second discharge nozzle is controlled by the pressure of gas filling a space on a liquid surface of the second material of metal flow inside the heating funnel.

10. The three-dimensional printing apparatus of claim 1,
wherein the heating funnel is formed in a Y shape so that an inner diameter of the heating funnel gradually decreases from the inner diameter of the inlet at the top of the heating funnel into the metal block is introduced to the inner diameter of the second discharge nozzle at the bottom thereof through which the second material of metal flow is discharged.

11. The three-dimensional printing apparatus of claim 1, further comprising:
an embedding block fixing the position of the first and second discharge nozzles by embedding the first and second discharge nozzles so that a gap between the first and second discharge nozzles is maintained between about 3 mm and about 50 mm.

12. The three-dimensional printing apparatus of claim 11,
wherein the embedding block surrounds a first heat source wound on the outer surface of the heating funnel together with a discharge unit where the first discharge nozzle is formed at the bottom facing the stage, and the discharge unit is spaced apart from the first heat source wound on the outer surface of the heating funnel and extends parallel to the outer surface of the heating funnel.

13. The three-dimensional printing apparatus of claim 11,
wherein a second temperature of the heating funnel is higher than a first temperature of a discharge unit where the first discharge nozzle is formed at the bottom facing the stage.

14. The three-dimensional printing apparatus of claim 13,
wherein the temperature difference between the first and second temperatures is induced by thermal resistance of insulating material of the embedding block filling a space between the heating funnel and the discharge unit which extend parallel to each other.

15. The three-dimensional printing apparatus of claim 13,
wherein the second temperature of the heating funnel is set to a sufficiently high temperature above the melting point of the metal block, and the first temperature of the discharge unit is set to a sufficiently low temperature at which vaporization or volatilization of the matrix mixed in the first material is suppressed.
